# EUROPEAN PATENT APPLICATION

(11) **EP 2 845 725 A1**
(43) Date of publication of application: **11.03.2015**
(21) Application number: 14182449.0
(22) Date of filing: 27.08.2014
(51) Int. Cl.: B32B 7/00, B32B 7/02, B32B 7/04, B32B 7/10, B32B 7/12, B32B 27/00, B32B 27/06, B32B 27/08, B32B 27/28, B32B 27/30, B32B 27/32, B32B 27/36, B32B 27/38, B32B 27/40, B32B 1/00, B32B 1/08, B32B 3/00, B32B 3/26, G02F 1/1335, G02B 5/00

(54) **Method for producing optical films**

(30) Priority: 10.09.2013 JP 2013187587; 09.06.2014 JP 2014118886
(71) Applicant: NITTO DENKO CORPORATION, Ibaraki-shi, Osaka 567-8680 (JP)
(72) Inventor: Fujioka, Kazuya, Osaka, 567-8680 (JP); Nishida, Kanji, Osaka, 567-8680 (JP)
(74) Representative: Hoffmann Eitle

(57) **Abstract**

A method for producing an optical film includes laminating a plurality of unit films each including a transparent layer in the thickness direction of the unit film to form a laminate; bonding a support on the lateral face of the laminate along the lamination direction; and cutting a lateral face layer of the laminate to which the support is bonded so that the plurality of unit films are continuous in the lamination direction.

## Description

### BACKGROUND OF THE INVENTION

### Field of the Invention

The present invention relates to a method for producing an optical film, and a daylighting film produced by the method.

### Description of Related Art

Conventionally, it has been known to introduce sunlight into indoors to adjust environment, for example, brightness of interior of a building, so- called daylighting (also called sunlight lighting and daylighting). However, recently, in view of reduction in environment burden, it is desired to introduce sunlight more efficiently into indoors to reduce use of artificial lighting during day.

Thus, various examinations are conducted to improve indoor brightness by introducing sunlight efficiently into indoors by attaching an optical member to, for example, a window: the optical member being capable of changing traveling direction of light based on optical behavior such as light refraction, diffraction, or reflection.

For such an optical member, for example, Japanese Unexamined Patent Publication No. 2000-268610 has proposed a transparent plastic plate in which a plurality of slits extending in horizontal directions are formed, Japanese Unexamined Patent Publication No. 2012-38626 has proposed an optical element including a transparent layer encapsulating a periodical structure of gaps arranged at a predetermined pitch in vertical directions, and Japanese Unexamined Patent Publication No. 2008-40025 has proposed a daylighting film including a translucent support having a plurality of unit prisms, wherein a reflection layer capable of reflecting light is provided at a portion of surface of each of the unit prisms.

These optical members are placed, for example, at a window of a house, and allow daylighting by reflecting and refracting sunlight entered from outdoors through the window.

### SUMMARY OF THE INVENTION

However, the plastic plate described in Japanese Unexamined Patent Publication No. 2000-268610, the optical element described in Japanese Unexamined Patent Publication No. 2012-38626, and the daylighting film described in Japanese Unexamined Patent Publication No. 2008-40025 are disadvantageous in that in view of industrial production, they are low in productivity and high in production costs.

To be specific, to produce the plastic plate of Japanese Unexamined Patent Publication No. 2000-268610, a plurality of slits are formed in the plastic plate by CO₂ or excimer laser processing method.

However, such a method for producing a plastic plate is a batch process, and therefore improvement in productivity is limited, and unsuitable for industrial production.

Furthermore, to produce the optical element of Japanese Unexamined Patent Publication No. 2012-38626, first, a master roll (hereinafter referred to as transfer roll) having projections and recessions is pressed against a resin sheet by roll-to-roll method, thereby transferring the projections and recessions of the transfer roll to the resin sheet. Thereafter, a light transmission layer is provided on a surface of the resin sheet where the projections and recessions are formed, or two resin sheets are bonded together so that the surfaces of the resin sheets where the projections and recessions are formed face each other, thereby forming a transparent layer encapsulating the periodical structure of gaps.

Such a method for producing an optical element is conducted by roll-to-roll method, and therefore improvement in productivity can be achieved, but generally transfer rolls are expensive, and thus reduction in equipment costs is limited. Particularly, when a seamless transfer roll is used, generally, a replica transfer roll cannot be formed, and therefore it is disadvantageous in that when the resin adhered to the transfer roller, an expensive transfer roller has to be prepared again, and equipment costs are increased. Furthermore, industrially, it is very difficult to bond the resin sheets together precisely so that the projections and recessions are faced each other, and therefore improvement in productivity is limited.

Furthermore, to produce the daylighting film of Japanese Unexamined Patent Publication No. 2008-40025, for example, first, a transfer roller having a surface on which a reverse pattern of the plurality of unit prism are formed is pressed against a sheet resin material (support), thereby forming a plurality of unit prisms on the support. Then, by vapor depositing a metal on a portion of the surfaces of each of the unit prisms, a reflection layer is formed, and thereafter, the plurality of unit prisms on which the reflection layer is formed is covered with a transmissive protection film.

However, such a method for producing a daylighting film requires an expensive transfer roller, and also the step of forming the reflection layer on a portion of the surfaces of each of the unit prisms is complicated, and therefore it is very difficult to conduct industrially, and improvement in productivity is limited.

Thus, an object of the present invention is to provide a method for producing an optical film that is simple but can improve productivity, and can reduce production costs; and a daylighting film produced by such a production method.

A method for producing an optical film of the present invention includes the steps of:
preparing a plurality of unit films each including a transparent layer configured to transmit light;
laminating the plurality of unit films in the thickness direction of the unit film to form a laminate;
bonding a support on the lateral face of the laminate along the lamination direction of the plurality of the unit films; and
cutting a lateral face layer of the laminate to which the support is bonded so that the plurality of unit films are continuous in the lamination direction.

With such a production method, an optical film including a film main body (lateral face layer of the laminate) in which the plurality of unit films are continuous in the lamination direction, and a support that supports the film main body can be produced by forming a laminate by laminating a plurality of unit films each including the transparent layer, bonding a support to the laminate, and cutting a lateral face layer of the laminate to which the support is bonded.

That is, an optical film can be produced by an simple method such as the following: first, a plurality of unit films each including a transparent layer are prepared, and the plurality of unit films are laminated to form a laminate; and a support is bonded to the lateral face of the laminate, and then a lateral face layer of the laminate is cut.

Thus, an optical film including a film main body including a plurality of unit films that are continuous in the lamination direction, and a support that supports the film main body can be produced without preparing expensive equipment such as a transfer roll. Thus, improvement in productivity of optical films can be achieved, and also reduction in production costs can be achieved.

Furthermore, in the above-described production method, a support is bonded to the laminate, and then a lateral face layer of the laminate is cut, and therefore the lateral face layer is supported by the support reliably at the time of cutting the lateral face layer of the laminate. Thus, in the lateral face layer of the laminate to be cut, separation of the unit films that are next to each other in the lamination direction can be suppressed.

Thus, in the method for producing an optical film of the present invention, improvement in productivity of optical films can be achieved, and reduction in production costs can be achieved, while suppressing separation of the unit films in the cutting step. Therefore, the method for producing an optical film of the present invention can be suitably used as an industrial production method of an optical film.

It is preferable that in the laminate, the unit films that are next to each other in the lamination direction are in direct contact with each other.

With such a configuration, in the laminate, the unit films that are next to each other in the lamination direction are in direct contact with each other without an adhesive layer interposed therebetween. That is, the laminate is formed without using an adhesive.

Thus, in the laminate, compared with the case where an adhesive layer is interposed between the unit films that are next to each other in the lamination direction, reduction in production costs (material costs) can be achieved.

However, in the laminate, when the unit films that are next to each other in the lamination direction are in direct contact with each other, and when the laminate is cut without bonding a support, unit films that are next to each other in the lamination direction may be separated.

In this regard, in the above-described production method, a support is bonded to the laminate, and thereafter a lateral face layer of the laminate is cut, and therefore even if an adhesive layer is not provided, the separation of the unit films that are next to each other in the lamination direction can be suppressed.

Therefore, the separation of the unit films can be suppressed while achieving reduction in production costs (material costs) in the cutting step.

It is preferable that the unit film is composed only of the transparent layer.

With such a configuration, an optical film including a film main body (lateral face layer of the laminate) in which a plurality of transparent layers are continuous in the lamination direction and a support that supports the film main body can be produced. In such an optical film, light is reflected and refracted at a border of the transparent layers that are next to each other in the lamination direction.

Thus, there is no need to provide separately a layer for reflecting light in the optical film, and reduction in production costs (material costs) can be achieved reliably.

It is preferable that the unit film further include a removal material layer; and in the lamination step, the plurality of unit films are laminated so that the transparent layer and the removal material layer are next to each other in the lamination direction; in the cutting step, the lateral face layer of the laminate to which the support is bonded is cut to form a laminate film including a laminate layer in which the transparent layer and the removal material layer are continuous in the lamination direction and the support that supports the laminate layer; and wherein the method further includes a replacement step in which the removal material layer is removed from the laminate layer and the removal material layer is replaced with an air layer.

With such a configuration, an optical film including a film main body (lateral face layer of the laminate) in which the transparent layer and the air layer are continuous in the lamination direction, and a support that supports the film main body can be produced by forming a laminate film including a laminate layer in which the transparent layer and the removal material layer are continuous in the lamination direction, and a support that supports the laminate layer, and then removing the removal material layer from the laminate film. In such an optical film, light is reflected and refracted at a border between the transparent layer and the air layer.

Thus, such an optical film can reliably reflect and refract sunlight, and more efficient daylighting can be achieved.

It is preferable that the unit film further include a reflection layer configured to reflect light, and in the lamination step, the plurality of unit films are laminated so that the transparent layer and the reflection layer are next to each other in the lamination direction.

With such a configuration, an optical film including a film main body (lateral face layer of the laminate) in which the transparent layer and the reflection layer are continuous in the lamination direction, and a support that supports the film main body can be produced. In such an optical film, the reflection layer reflects light.

Thus, such an optical film can reliably reflect sunlight, and more efficient daylighting can be achieved.

It is preferable that the laminate is generally cylindrical (i.e., solid and cylindrical) extending in the lamination direction; the support is a sheet, and is rolled to configure a support roll; in the bonding step, the support drawn out from the support roll is bonded to the lateral face of the laminate; and in the cutting step, a lateral face layer of the laminate to which the support is bonded is continuously cut by rotating the support roll with its axis as the center and rotating the laminate with its axis as the center.

With such a configuration, the support drawn out from the support roll is bonded to the lateral face of the laminate, and then a lateral face layer of the laminate to which the support is bonded is cut continuously by rotating the support roll with its axis as the center and rotating the generally cylindrical laminate with its axis as the center. In this manner, the above-described optical film can be produced continuously.

Thus, such a production method can further improve productivity of an optical film, and more suitably used as an industrial production method of an optical film.

It is preferable that in the preparation step, the plurality of unit films are prepared as a continuous film in which the plurality of unit films are next to each other continuously, and in the lamination step, the continuous film is bent at continuous portions of the unit films that are next to each other to laminate the plurality of unit films to form the laminate.

With such a configuration, in the lamination step, the continuous film in which the plurality of unit films are continuous is bent at the continuous portions to laminate the plurality of unit films to form the laminate, and therefore compared with the case where the plurality of independent unit films are laminated, the plurality of unit films are laminated smoothly.

A daylighting film of the present invention is produced by the above-described method for producing an optical film.

With such a configuration, a daylighting film can be produced by the above-described method for producing an optical film, and therefore reduction in production costs can be achieved, while achieving simple and efficient production.

### BRIEF DESCRIPTION OF THE DRAWINGS

FIG. 1 is a perspective view of an embodiment of the unit film (embodiment in which the unit film is rectangular when viewed in the thickness direction) according to a first embodiment of the method for producing an optical film of the present invention.
FIG. 2 is a perspective view of a laminate formed by laminating the unit films shown in FIG. 1.
FIG. 3 is a perspective view of a daylighting film cut out from the laminate shown in FIG. 2.
FIG. 4 is a perspective view of another embodiment of the unit film according to the first embodiment of the method for producing an optical film of the present invention (embodiment in which the unit film is circular when viewed in the thickness direction).
FIG. 5 is a diagram for illustrating a cutting step, in which a support is bonded to the lateral face of the laminate formed by laminating the unit films shown in FIG. 4, and then a lateral face layer of the laminate is cut.
FIG. 6 shows a perspective view of a processing sheet from which the unit film shown in FIG. 1 is cut out.
FIG. 7 shows a perspective view of a processing sheet from which the unit film shown in FIG. 4 is cut out.
FIG. 8 is a diagram for illustrating a cutting step, in which a support drawn out from the support roll is bonded to the lateral face of the laminate shown in FIG. 5, and then a lateral face layer of the laminate is continuously cut.
FIG. 9 is a perspective view of the daylighting film shown in FIG. 8.
FIG. 10 is a schematic diagram illustrating the daylighting film shown in FIG. 9 attached to a glass window.
FIG. 11 is a perspective view of the unit film according to a second embodiment of the method for producing an optical film of the present invention.
FIG. 12 is a diagram for illustrating a cutting step, in which a support is bonded to the lateral face of the laminate formed by laminating the unit films shown in FIG. 11, and then a lateral face layer of the laminate is cut.
FIG. 13 is a perspective view of the laminate film shown in FIG. 12.
FIG. 14 is a perspective view of a daylighting film formed by removing the removal material layer from the laminate film shown in FIG. 13.
FIG. 15 is a schematic diagram illustrating the daylighting film shown in FIG. 14 attached to a glass window.
FIG. 16 is a schematic diagram illustrating the daylighting film produced in a third embodiment of the method for producing an optical film of the present invention attached to a glass window.
FIG. 17 is a perspective view of the continuous film in an embodiment (embodiment in which the unit film is rectangular) of the fourth embodiment of the method for producing an optical film of the present invention.
FIG. 18 is a perspective view of the continuous film in another embodiment (embodiment in which the unit film is circular) of the fourth embodiment of the method for producing an optical film of the present invention.
FIG. 19 is a perspective view of the continuous film shown in FIG. 17 bent at the continuous portions.
FIG. 20 is a perspective view of the continuous film shown in FIG. 18 bent at the continuous portions.

### DETAILED DESCRIPTION OF THE INVENTION

### 1. First Embodiment

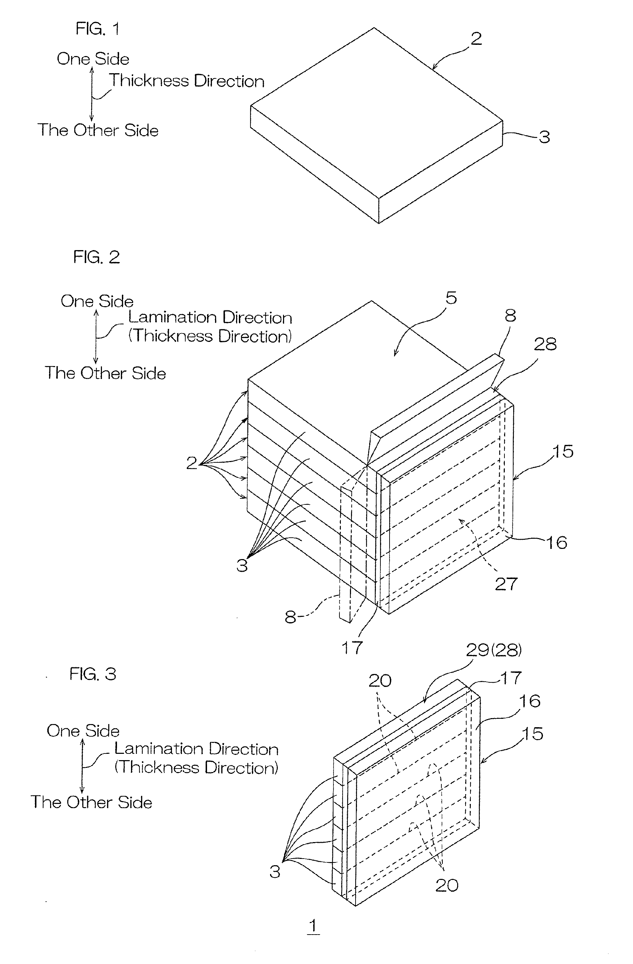

In a method for producing an optical film of the present invention, as shown in FIG. 1, first, a unit film 2 including a transparent layer 3 is prepared in a plural number (preparation step).

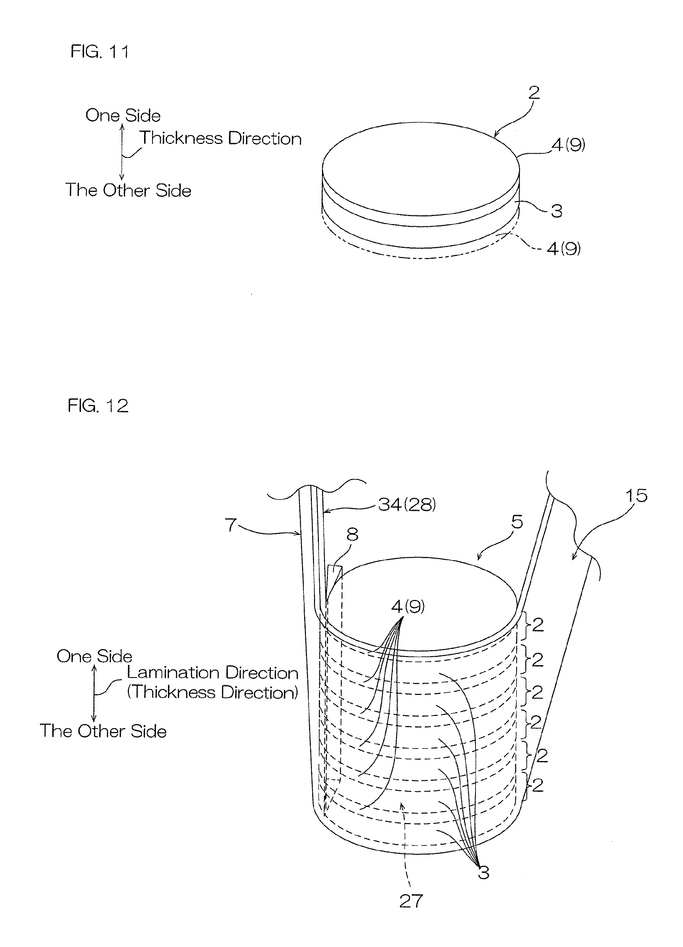

Such a unit film 2 can be composed only of the transparent layer 3, and in addition to the transparent layer 3, the unit film 2 may include, for example, a removal material layer 4 and a reflection layer 9 (ref: FIG. 11).

In the first embodiment of the present invention, the unit film 2 is formed only of the transparent layer 3.

The transparent layer 3 is configured to transmit light, and in view of ease in processing, preferably formed into a sheet from a transparent organic material.

Examples of the transparent organic material include known resin materials, and examples of the resin material include polyester (e.g., polyethylene terephthalate (PET)), polyolefin (e.g., polyethylene (PE), polypropylene (PP)), polycarbonate (PC), polyvinyl chloride, acrylic resin, polystyrene (PS), epoxy resin, silicone resin, fluorine resin, urethane resin, cellulose, polyvinylbutyral, and ethylene vinyl acetate copolymers.

Of these transparent organic materials, preferably, polyester and polyvinyl chloride are used, and even more preferably, polyvinyl chloride is used. These organic materials can be used singly, or can be used in combination of two or more.

The thickness of the transparent layer 3 can be changed suitably in accordance with purpose of use, but for example, the thickness is 20 µm or more, preferably 50 µm or more, even more preferably 100 µm or more, and for example, 10 mm (10⁴ µm) or less, preferably 1 mm (10³ µm) or less, even more preferably 500 µm or less.

The transparent layer 3 has a light transmittance of, when the transparent layer 3 has a thickness of 100 µm, for example, 80% or more, preferably 90% or more, even more preferably 92% or more, and for example, 98% or less relative to light having a wavelength of 440 to 600 nm.

The transparent layer 3 has a relative index of refraction of, for example, 1.3 or more, preferably 1.4 or more, and for example, 1.8 or less, preferably 1.65 or less relative to the index of refraction of air. The refraction can be measured by a prism coupler.

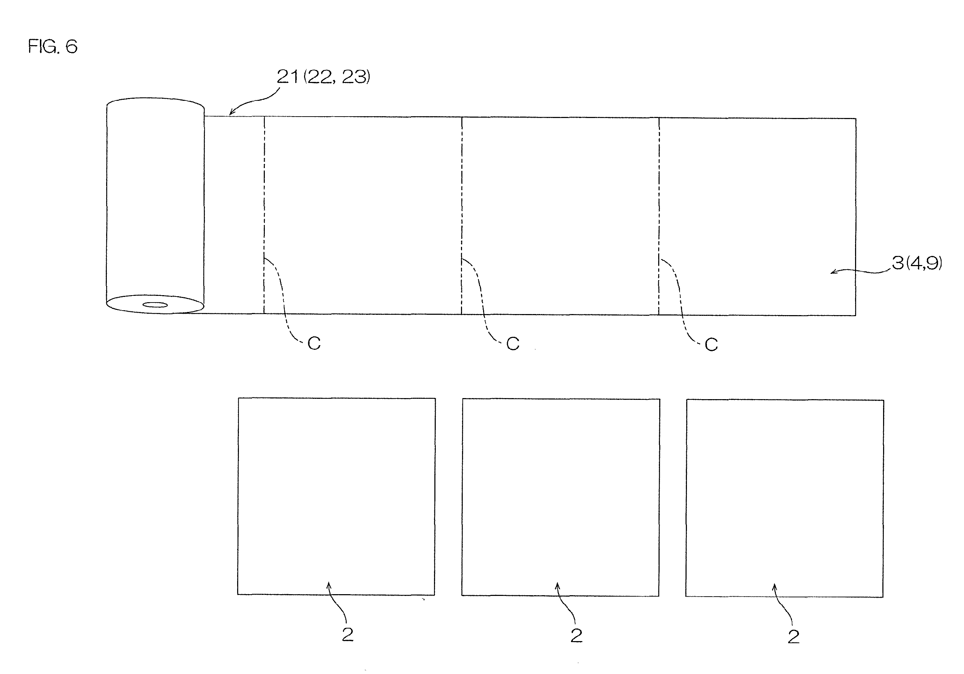

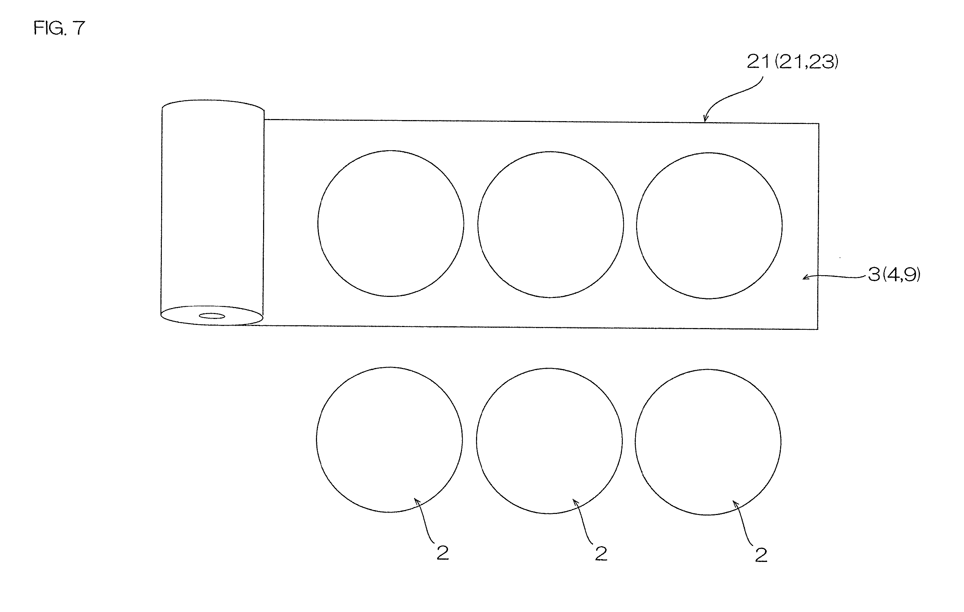

To prepare the unit film 2, for example, as shown in FIGs. 6 and 7, a processing sheet 21 composed only of the transparent layer 3 is prepared, and then thereafter, the unit films 2 having a predetermined shape are cut out from the processing sheet 21.

The unit film 2 (transparent layer 3) can be cut out from the processing sheet 21 by a known processing method, for example, by cutting and punching.

The shape of the unit film 2 is not particularly limited, and the unit film 2 is formed, for example, into a polygonal shape or circular shape, preferably into a rectangular or circular shape, particularly preferably into a circular shape when viewed in the thickness direction of the transparent layer 3 by the above-described processing method.

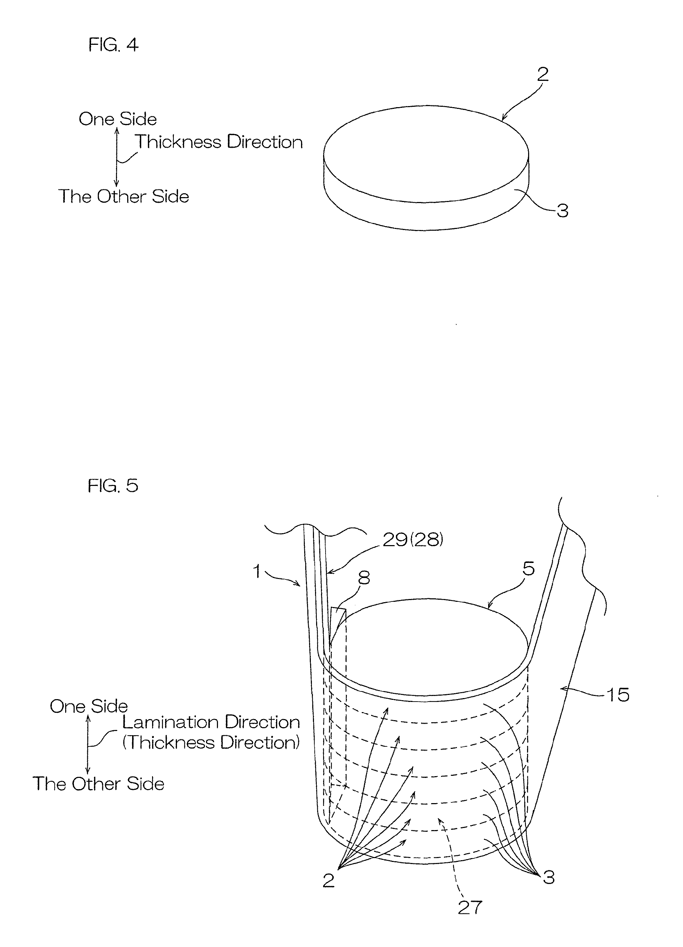

The size of the unit film 2 is suitably changed in accordance with its purpose of use, but when the unit film 2 is rectangular (quadrangle)when viewed in the lamination direction (ref: FIG. 1), each of its sides is, for example, 5 cm to 2 m (200 cm), and when the unit film 2 is circular viewed in the lamination direction (ref: FIG. 4), the diameter is, for example, 10 cm to 1 m (100 cm), and in view of processability, preferably 10 cm to 50 cm.

The unit film 2 has an area of, for example, 25 cm² or more, preferably 300 cm² or more, even more preferably 400 cm² or more, for example, 40000 cm² or less, preferably 10000 cm² or less, even more preferably 2000 cm² or less.

The unit film 2 is prepared in a plural number, for example, 300 or more, preferably 500 or more, even more preferably 1000 or more, and for example, 60000 or less, preferably 10000 or less.

To prepare the unit film 2 in a plural number, for example, the processing sheet 21 is formed to be large so that a plurality of unit films 2 can be cut out, and the unit film 2 can be cut out in a plural number from the processing sheet 21, or the processing sheet 21 can be prepared in a plural number, and one unit film 2 can be cut out from each of the processing sheets 21.

Of these methods for preparing the plurality of unit films 2, in view of production costs, a preferable method is that the processing sheet 21 is formed into an elongated and continuous flat belt form in a predetermined direction so that the plurality of unit films 2 can be cut out, and the plurality of unit films 2 are cut out from the processing sheet 21.

When the processing sheet 21 is formed into an elongated flat belt form, the processing sheet 21 preferably has flexibility, and is wound into a roll. Then, the plurality of unit films 2 are cut out from the portion drawn out of the rolled processing sheet 21.

To be more specific, a rectangular unit film 2 is cut out in a plural number from the processing sheet 21 as shown in FIG. 6 by cutting out the elongated flat belt processing sheet 21 at imaginary cutting lines C.

A circular unit film 2 is cut out in a plural number from the processing sheet 21 as shown in FIG. 7 by punching the elongated flat belt processing sheet 21 in a circular shape.

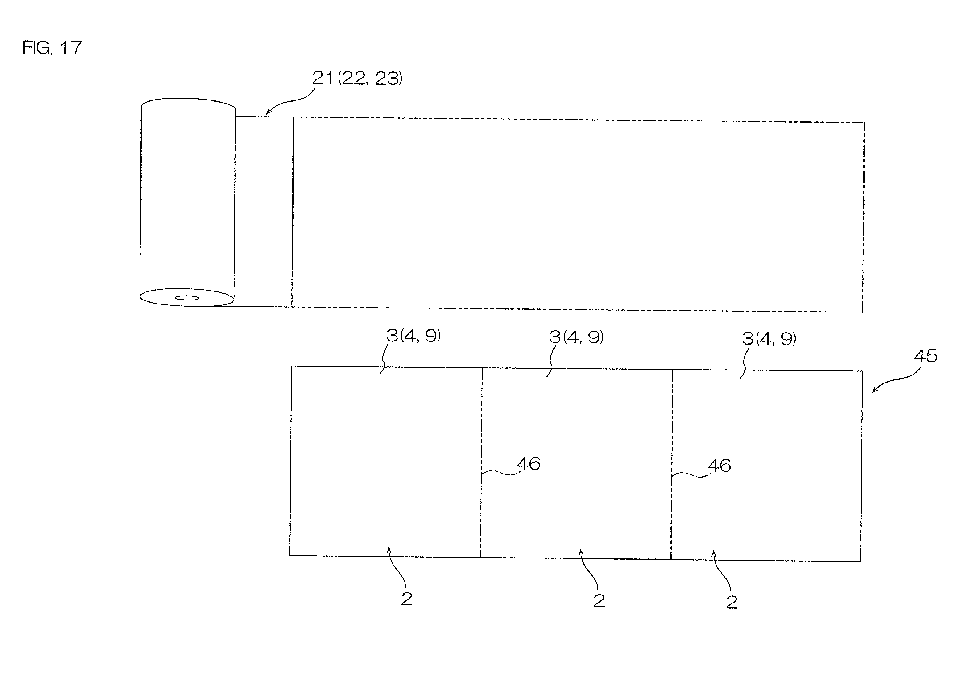

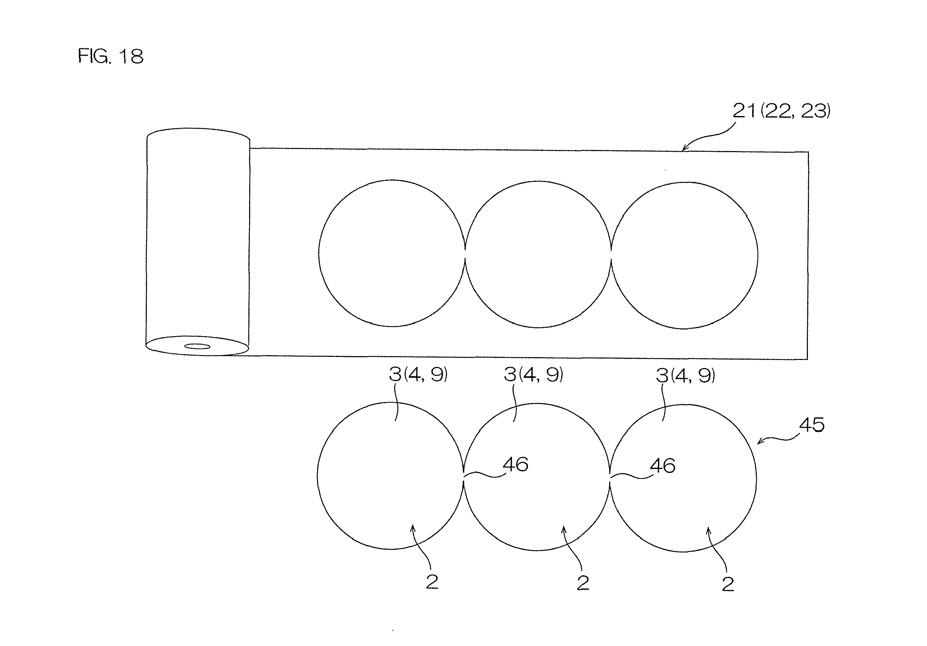

Each of the plurality of unit films 2 can be independent from each other, or can be continuous, although it is to be described later (ref: FIG. 17 and FIG. 18). In the first embodiment of the present invention, the plurality of unit films 2 are each independent from each other.

The plurality of unit films 2 preferably have the same shape and size.

Then, as shown in FIGs. 2 and 5, the plurality of unit films 2 are laminated in the thickness direction of the unit film 2, thereby preparing a laminate 5 (lamination step).

To be more specific, the plurality of unit films 2 are laminated so that the plurality of transparent layers 3 are overlapped with each other one by one in the thickness direction. That is, the thickness direction of the unit film 2 and the lamination direction of the laminate 5 are the same direction.

In FIG. 2 and FIG. 5, for simplicity, the number of the plurality of unit films 2 is simplified, and the laminate 5 is composed of six unit films 2, but actually, the laminate 5 is formed by laminating, for example, 300 to 60000, preferably 500 to 30000, even more preferably 1000 to 10000 unit films 2.

When the unit film 2 is formed into the same shape and size, the plurality of unit films 2 are laminated so that their outer peripheral end edges coincide with each other when projected in the lamination direction.

In the laminate 5, an adhesive layer can be provided between the unit films 2 (transparent layer 3) that are next to each other in the lamination direction, or the adhesive layer may not be provided.

Examples of the adhesive that forms such an adhesive layer include known adhesives or pressure-sensitive adhesives of, for example, epoxy, silicone, acrylic, and ultraviolet ray-curing types. The adhesive preferably transmits light.

The adhesive layer has a thickness of, for example, 20 nm or more, preferably 50 nm or more, and for example, 100 µm or less, preferably 10 µm or less.

Of these laminates 5, in view of material costs, an adhesive layer is preferably not provided between the unit films 2 (transparent layer 3) that are next to each other in the lamination direction. In this case, in the laminate 5, the unit films 2 (transparent layer 3) that are next to each other in the lamination direction are in direct contact with each other.

In the above manner, a columnar (block) laminate 5 extending in the lamination direction is formed. To be more specific, when the unit film 2 is rectangular when viewed in the thickness direction, a prism laminate 5 is formed (ref: FIG. 1 and FIG. 2), and when the unit film 2 is circular when viewed in the thickness direction, a cylindrical laminate 5 is formed (ref: FIG. 4 and FIG. 5).

The laminate 5 has a height (lamination direction length) of, for example, 1 cm or more, preferably 5 cm or more, even more preferably 40 cm or more, and for example, 200 cm or less, preferably 100 cm or less.

Then, as shown in FIGs. 2 and 5, a support 15 is bonded (bonding step) to the lateral face 27 (surface extending along the lamination direction) of the laminate 5 along the lamination direction.

The support 15 is a sheet, as shown in FIG. 2, and includes a carrier 16, and a pressure-sensitive adhesive layer 17 provided on one side of the carrier 16.

Examples of the carrier 16 include a PET film carrier, a low adhesive carrier composed of fluorine polymer (e.g., polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer, etc.), and a low adhesive carrier composed of nonpolar polymer (e.g., olefin resins such as polyethylene and polypropylene, etc.).

Of these examples of the carrier 16, preferably, a PET film and a low adhesive carrier composed of nonpolar polymer are used, and even more preferably, a low adhesive carrier composed of polypropylene is used.

Furthermore, the carrier 16 is preferably configured to transmit light in view of freedom in use of the daylighting film 1.

On the surface of such a carrier 16, depending on the production method and use, a release-treatment layer is suitably provided by a release-treatment agent.

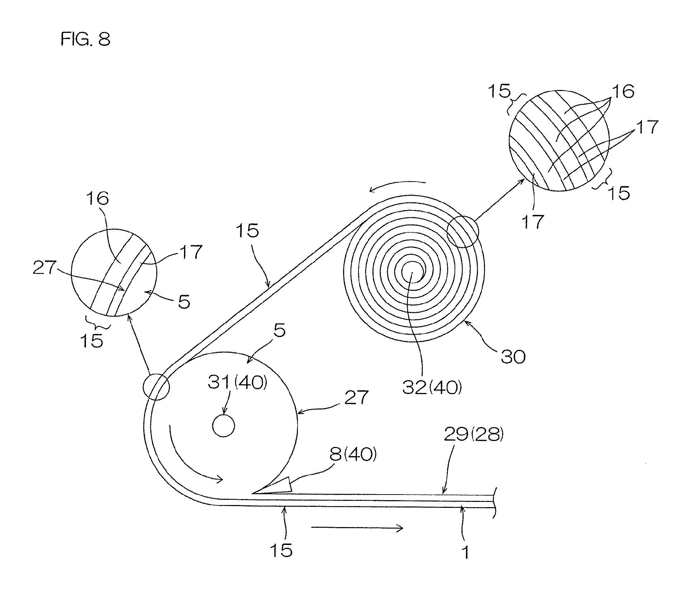

To be specific, when the support 15 is configured as a support roll 30 (described later) (ref: FIG. 8), the release-treatment layer is provided on the surface of the carrier 16 opposite to the surface where the pressure-sensitive adhesive layer 17 is provided.

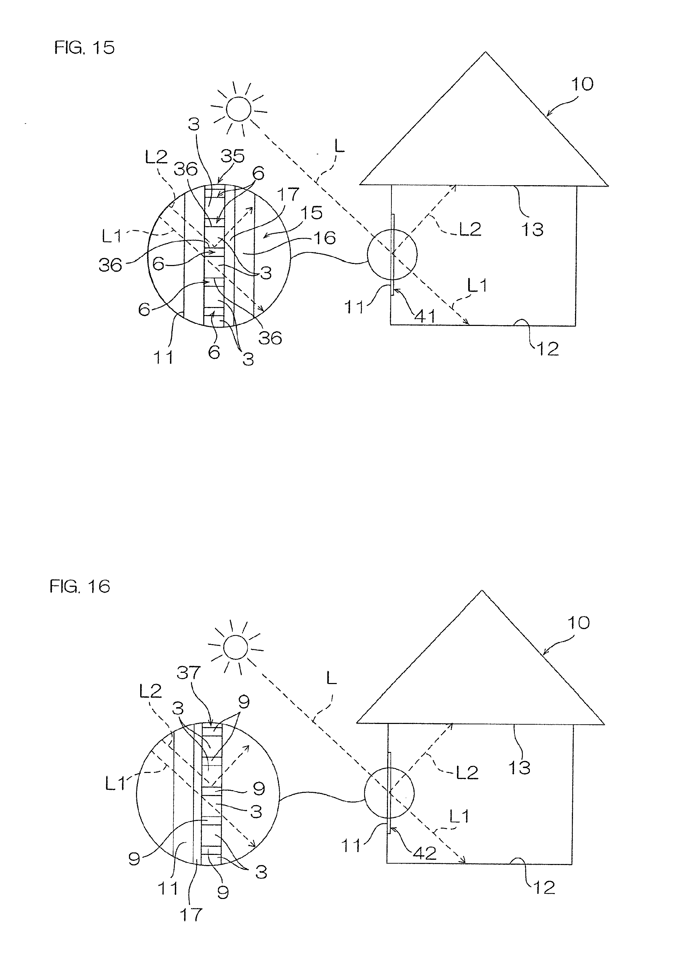

When the daylighting film 1 is to be attached to, for example, a glass window 11 after releasing the carrier 16 (ref: FIG. 16), the release-treatment layer is provided on the surface of the carrier 16 on the side where the pressure-sensitive adhesive layer 17 is provided.

When the support 15 is configured to be a support roll 30 (described later) (ref: FIG. 8), and the daylighting film 1 is attached to the glass window 11 after releasing the carrier 16 (ref: FIG. 16), the release-treatment layer is provided on both sides of the carrier 16.

When the daylighting film 1 is bonded to the glass window 11 while keeping the carrier 16 (ref: FIG. 15), the release-treatment layer does not have to be provided on the surface of the carrier 16 on the side where the pressure-sensitive adhesive layer 17 is provided. The peeling force of the carrier 16 by the release-treatment layer is adjusted suitably.

The thickness of the carrier 16 can be changed suitably in accordance with purpose of use, and for example, 10 µm or more, preferably 30 µm or more, and for example, 100 µm or less, preferably 50 µm or less.

The light transmittance of the carrier 16 for the light with a wavelength of 440 to 600 nm is, when the thickness of the carrier 16 is 50 µm, for example, 85% or more, preferably 90% or more, even more preferably 92% or more, and for example, 98% or less.

Examples of the pressure-sensitive adhesive that forms the pressure-sensitive adhesive layer 17 include known pressure-sensitive adhesives such as epoxy pressure-sensitive adhesives, silicone pressure-sensitive adhesives, acrylic pressure-sensitive adhesives, and ultraviolet ray-curing pressure-sensitive adhesives. The pressure-sensitive adhesive preferably transmits light. The pressure-sensitive adhesive layer 17 can also be configured from a known double-sided adhesive tape.

The pressure-sensitive adhesive layer 17 is formed into a thin layer on the entire surface of one side of the carrier 16, and the thickness thereof is, with the support 15 bonded to the laminate 5, for example, 1 µm or more, preferably 5 µm or more, and for example, 100 µm or less, preferably 40 µm or less.

When the carrier 16 itself has pressure-sensitive adhesiveness, the pressure-sensitive adhesive layer 17 is unnecessary in the support 15.

To bond the support 15 to the lateral face 27 of the laminate 5 along the lamination direction, as necessary, the laminate 5 is pressed from both sides of the laminate 5 in the lamination direction to hold the laminate 5.

The conditions for pressing include, for example, a pressure from one side (the other side) of the lamination direction of the laminate 5 of, for example, 0.01 MPa or more, preferably 0.1 MPa or more, and for example, 10 MPa or less, preferably 5 MPa or less.

Then, the support 15 is bonded to the laminate 5 so that the pressure-sensitive adhesive layer 17 of the support 15 is pressure-bonded to the lateral face 27 of the laminate 5. When the laminate 5 is cylindrical, the support 15 can be bonded continuously using a touch roll.

In this manner, the support 15 is bonded to the lateral face 27 of the laminate 5 along the lamination direction.

Then, as shown in FIGs. 2 and 5, a lateral face layer 28 of the laminate 5 to which the support 15 is bonded is cut so that the plurality of unit films 2 are continuous in the lamination direction of the laminate 5 (thickness direction of the transparent layer 3) (cutting step).

The lateral face layer 28 of the laminate 5 can be cut by any method without limitation as long as the lateral face layer 28 supported by the support 15 can be cut out from the laminate 5.

For example, when the laminate 5 is a prism, the lateral face layer 28 can be cut by a method in which, as shown in the solid line in FIG. 2, the cutting blade 8 is disposed so that the cutting blade 8 is perpendicular to the lamination direction and that the cutting direction is along the lamination direction, and the lateral face layer 28 supported by the support 15 is cut out from the laminate 5; and as shown in the phantom line in FIG. 2, the cutting blade 8 is disposed so that the cutting blade 8 is along the lamination direction and that the cutting direction is perpendicular to the lamination direction of the laminate, and the lateral face layer 28 supported by the support 15 is cut out from the laminate 5.

When the laminate 5 is cylindrical, the lateral face layer 28 can be cut by the following method: as shown in FIG. 5, the cutting blade 8 is disposed along the lamination direction, the laminate 5 is rotated with its axis as the center, and the lateral face layer 28 supported by the support 15 is cut like shaving a vegetable cylinder into a thin sheet (hereinafter referred to as Katsura-muki (Japanese knife technique)) from the laminate 5.

In the above manner, the lateral face layer 28 supported by the support 15, that is, the daylighting film 1 (an example of optical film) is cut out from the laminate 5.

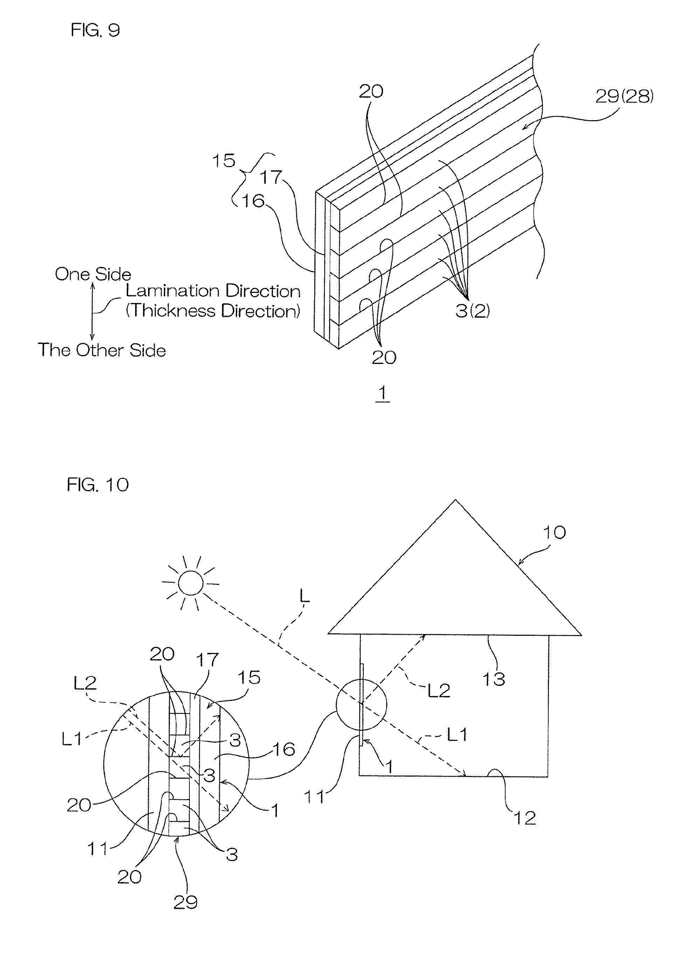

The daylighting film 1 includes, as shown in FIGs. 3 and 9, a film main body 29 and the support 15.

The film main body 29 is the lateral face layer 28 cut out from the support 15, and is formed into a thin film. The film main body 29 has a plurality of transparent layers 3 corresponding to the plurality of unit films 2, and the plurality of transparent layers 3 are disposed so as to be continuous in the lamination direction (surface direction perpendicular to the thickness direction in the film main body 29). At a border 20 of the transparent layers 3 that are next to each other in the lamination direction, air is interposed slightly, thereby forming an air layer.

The thickness of the film main body 29 (lateral face layer 28 of the laminate 5) can be set suitably depending on purpose of use, and is, for example, 20 µm or more, preferably 50 µm or more, even more preferably 100 µm or more, and for example, 10 mm (10⁴ µm) or less, preferably, 2 mm (2 × 10³ µm) or less, even more preferably 500 µm or less, particularly preferably 300 µm or less. The thickness of the film main body 29 can be adjusted suitably based on the disposition and angle of the cutting blade 8 relative to the laminate 5 when the laminate 5 is cut.

When the laminate 5 is cylindrical (ref: FIG. 5), the above-described bonding step and cutting step are preferably performed continuously by the cutting device 40 as shown in FIG. 8.

In FIG. 5 and FIG. 8, the support 15 is shown as one layer for simplicity, but the support 15 actually includes the pressure-sensitive adhesive layer 17 and the carrier 16 as described above and as shown in FIG. 3.

The cutting device 40 includes, as shown in FIG. 8, a rotational axis 32, a pair of holding members 31, and the cutting blade 8.

The rotational axis 32 is generally cylindrical, and is configured to be rotatable with its axis as the center.

The elongated flat belt support 15 is wound around the rotational axis 32. To be specific, the elongated flat belt support 15 is wound like a swirl around the rotational axis 32 so that the pressure-sensitive adhesive layer 17 is positioned inside relative to the carrier 16 in the radial direction of the rotational axis 32. In this manner, the support 15 is configured as a support roll 30 with the rotational axis 32 as the center.

In the support roll 30, the support 15 is disposed so as to be next to each other in the radial direction of the rotational axis 32, and the pressure-sensitive adhesive layer 17 and the carrier 16 are disposed one by one repeatedly. When the support 15 is configured as the support roll 30, as described above, the release-treatment layer is provided on the surface of the carrier 16 opposite to the side where the pressure-sensitive adhesive layer 17 is provided, and therefore in the radial direction of the rotational axis 32, between the supports 15 that are next to each other, to be specific, between the pressure-sensitive adhesive layer 17 of the support 15 disposed outside in the radial direction and the carrier 16 of the support 15 disposed inside in the radial direction, the release-treatment layer is interposed.

The pair of holding members 31 is disposed in spaced apart relation in the radial direction of the support roll 30 relative to the support roll 30. Each of the pair of the holding members 31 is a generally circular shape, and is configured to be rotatable with its axis as the center.

The pair of holding members 31 is disposed in spaced apart relation from each other in the axial direction of the holding members 31. The pair of holding members 31 holds the laminate 5 by sandwiching the generally cylindrical laminate 5 from both sides in the lamination direction with the above-described pressure. Each of the holding members 31 is disposed so that the laminate 5 and the axis coincide with each other when the laminate 5 is held.

The cutting blade 8 is disposed along the lamination direction relative to the lateral face 27 of the laminate 5 held by the pair of holding members 31, and the distal end of the cutting blade 8 is in contact with the lateral face 27 of the laminate 5.

The cutting blade 8 is configured so that the cutting blade 8 is brought closer to the axis of the laminate 5 as the diameter of the laminate 5 decreases along the advancement of the cutting step while the distal end of the cutting blade 8 is making contact with the lateral face 27 of the laminate 5.

To continuously perform the bonding step and cutting step with the cutting device 40, first, the support 15 drawn from the support roll 30 is bonded to the lateral face 27 of the laminate 5 held by the pair of holding members 31 (bonding step).

To be more specific, the support 15 that was drawn is pulled around toward a tangential line direction of the laminate 5 so that the drawn pressure-sensitive adhesive layer 17 of the support 15 is pressure-bonded to the lateral face 27 of the laminate 5, and bonded to the lateral face 27 of the laminate 5 where the central angle of the laminate 5 is in the range of, for example, 90° to 270°, preferably 120° to 240°.

Then, the pair of holding members 31 is driven and rotated anticlockwise when viewed from one side in the axial direction of the holding member 31 (frontward relative to the paper plane in FIG. 8) by the driving force from a driving source such as a motor included in the cutting device 40.

This causes the laminate 5 held by the pair of holding members 31 to rotate with its axis as the center, and the support roll 30 is driven with the axis of the rotational axis 32 as the center.

In this manner, the lateral face layer 28 of the laminate 5 to which the support 15 is bonded is cut out continuously with the cutting blade 8 like Katsura-muki (cutting step).

In the above manner, elongated and flat belt daylighting film 1 is prepared continuously from the laminate 5 and support roll 30.

With such a production method of the daylighting film 1, as shown in FIGs. 1 to 9, the daylighting film 1 including a film main body 29 (lateral face layer 28 of the laminate 5) in which the plurality of unit films 2 are continuous in the lamination direction, and a support 15 that supports the film main body 29 can be produced by laminating the unit film 2 including a transparent layer 3 in a plural number to form the laminate 5, then thereafter bonding the support 15 to the laminate 5, and cutting a lateral face layer 28 of the laminate 5 to which the support 15 is bonded.

That is, the daylighting film 1 can be produced by a simple method such as the following: first, the unit film 2 including a transparent layer 3 is prepared in a plural number, and the unit film 2 are laminated in the plural number to form a laminate 5, and a support 15 is bonded to the lateral face 27 of the laminate 5, and thereafter a lateral face layer 28 of the laminate 5 is cut.

Thus, the daylighting film 1 including a film main body 29 in which the plurality of unit films 2 are continuous in the lamination direction and a support 15 that supports the film main body 29 can be produced without preparing expensive equipment such as a transfer roll. Thus, productivity of the daylighting film 1 can be improved, and production costs can be decreased.

Furthermore, as shown in FIGs. 2 and 5, the lateral face layer 28 of the laminate 5 is cut after the support 15 is bonded to the laminate 5, and therefore the lateral face layer 28 is reliably supported by the support 15 when the lateral face layer 28 of the laminate 5 is cut. Thus, in the lateral face layer 28 of the laminate 5 to be cut, separation of the unit films 2 that are next to each other in the lamination direction can be suppressed.

Therefore, such a production method of the daylighting film 1 allows for improvement in productivity of the daylighting film 1, and while achieving decrease in production costs, separation of the unit films 2 in the cutting step can be suppressed. Thus, such a production method of the daylighting film 1 can produce a daylighting film 1 simply and efficiently, and can be suitably used as an industrial production method of a daylighting film 1.

Furthermore, as shown in FIGs. 2 and 5, in the laminate 5, the unit films 2 that are next to each other in the lamination direction are in direct contact with each other without an adhesive layer interposed therebetween. That is, the laminate 5 is formed without using an adhesive. Therefore, compared with the case where the adhesive is used, decrease in production costs (material costs) can be achieved.

Furthermore, as described above, the lateral face layer 28 of the laminate 5 is cut after the support 15 is bonded to the laminate 5, and therefore even if the adhesive is not used in the laminate 5, separation of the unit films 2 that are next to each other in the lamination direction can be suppressed.

Thus, while achieving decrease in production costs (material costs), separation of the unit films 2 in the cutting step can be suppressed.

In the first embodiment, as shown in FIG. 2, the unit film 2 is formed only from the transparent layer 3.

Therefore, in the first embodiment, a daylighting film 1 including (composed only of) a film main body 29 (lateral face layer 28 of the laminate 5) in which the plurality of transparent layers 3 are continuous in the lamination direction, and a support 15 that supports the film main body 29 can be produced. In the daylighting film 1, light is reflected and refracted at borders 20 (slight air layer) of the transparent layers 3 that are next to each other in the lamination direction.

Therefore, a layer for reflecting light does not have to be provided separately in the daylighting film 1, and decrease in production costs (material costs) can be reliably achieved.

Furthermore, when the laminate 5 is generally cylindrical extending in the lamination direction, as shown in FIG. 8, the bonding step and cutting step can be performed continuously with the cutting device 40.

In this case, the support 15 is wound around the rotational axis 32 of the cutting device 40 to configure a support roll 30, and the support 15 drawn from the support roll 30 is bonded to the lateral face 27 of the laminate 5, and then thereafter the support roll 30 is rotated with the axis as the center, and the generally cylindrical laminate 5 is rotated with the axis as the center, and the lateral face layer 28 of the laminate 5 to which the support 15 is bonded is cut continuously. In this manner, the daylighting film 1 can be produced continuously.

Thus, further improvement in productivity of the daylighting film 1 can be achieved, and the method is more suitably used as an industrial production method of the daylighting film 1.

The daylighting film 1 produced as described above is attached, as shown in FIG. 10, for example, to an inner side surface of the glass window 11 of a building such as a house 10. The daylighting film 1 can also be attached so as to be included as an inner layer of multilayer glass or laminated glass.

To attach the daylighting film 1 to the glass window 11, first, the daylighting film 1 is cut into a shape and size that are suitable for the portion to be attached (cutting step).

The daylighting film 1 can be cut by a known processing method such as cutting and punching.

Then, the daylighting film 1 is bonded to the inner side surface of the glass window 11.

The daylighting film 1 can be bonded to the inner side surface of the glass window 11 by the following method: for example, an adhesive or pressure-sensitive adhesive is applied to the film main body 29 on the opposite side to the side where the support 15 is provided or the inner side surface of the glass window 11, and the daylighting film 1 is bonded to the inner side surface of the glass window 11 with such an adhesive or pressure-sensitive adhesive (ref: FIG. 10).

Examples of the adhesive or pressure-sensitive adhesive include known adhesives or pressure-sensitive adhesive including epoxy, silicone, acrylic, and ultraviolet ray-curing types. The adhesive or pressure-sensitive adhesive preferably transmits light.

When the daylighting film 1 is attached to the inner side surface of the glass window 11 using the adhesive or pressure-sensitive adhesive in such a manner, the carrier 16 of the support 15 is kept without being removed. In this case, the carrier 16 is preferably configured to transmit light.

The daylighting film 1 can also be bonded to the inner side surface of the glass window 11 by the following method: the carrier 16 of the support 15 is removed, and the exposed pressure-sensitive adhesive layer 17 is pressure-bonded to the inner side surface of the glass window 11, and the daylighting film 1 is attached to the inner side surface of the glass window 11 (ref: FIG. 16). In this case, the carrier 16 may transmit light or may not transmit light.

When the daylighting film 1 is attached to the glass window 11 in such a manner, as shown in FIG. 10, of light L (e.g., sunlight) entered from outside through the glass window 11, a portion of light L1 transmitted through the transparent layer 3 travels toward the floor 12 of the house 10; and another portion of light L2 is reflected at the border 20 (slight air layer) of the transparent layers 3 that are next to each other in the lamination direction and travels toward the ceiling 13 of the house 10.

Therefore, with the daylighting film 1, efficient daylighting can be achieved, and brightness of the entire house 10 can be improved.

### 2. Second Embodiment

Next, with reference to FIG. 11 to FIG. 15, a second embodiment of the method for producing an optical film of the present invention is described. In the second embodiment, those members that are the same as in the above-described first embodiment are designated with the same reference numerals, and descriptions thereof are omitted.

In the first embodiment, as shown in FIGs. 1 and 4, the unit film 2 is formed only from the transparent layer 3, but in the second embodiment, the unit film 2 includes, as shown in FIG. 11, a transparent layer 3, and a removal material layer 4.

Therefore, in the second embodiment, first, a unit film 2 in which the transparent layer 3 and the removal material layer 4 are laminated is prepared in a plural number (preparation step).

The unit film 2 can be prepared by, for example, the following methods as shown in FIGs. 6 and 7: the removal material layer 4 is disposed on the surface (one side surface in the thickness direction) of the transparent layer 3 to prepare a processing sheet 22, and thereafter a unit film 2 having a predetermined shape is cut out from the processing sheet 22; and the removal material layer 4 is disposed on the surface of the transparent layer 3 processed into a predetermined shape to form a unit film 2.

For the method for preparing such a unit film 2 in a plural number, for example, the method as described in the first embodiment is used, and preferably, the processing sheet 22 is formed to be an elongated and flat belt form, and a plurality of the unit films 2 are cut out from the processing sheet 22.

As shown in FIG. 11, the removal material layer 4 is configured to be removable in the replacement step to be described later, and in view of simplicity in production process, preferably, formed from a soluble material that is soluble to a solvent.

Examples of the soluble material include hydrophilic materials (e.g., polyvinyl alcohol (PVA), starch paste, etc.) that are soluble to water, and lipophilic materials that are soluble to organic solvents (e.g., alcohol, etc.), and preferably, hydrophilic material, even more preferably, PVA is used. Such a soluble material can be used singly, or can be used in combination of two or more.

The thickness of such a removal material layer 4 is changed suitably in accordance with optical use of the daylighting film 41 (described later), but thinner is better; and for example, the thickness is 20 nm or more, for example, 500 µm (5 × 10⁵ nm) or less, preferably 50 µm (5 × 10⁴ nm) or less, even more preferably 20 µm (20³ nm) or less.

The ratio of the thickness of the removal material layer 4 relative to the thickness of the transparent layer 3 (thickness of the removal material layer 4/thickness of the transparent layer 3) is, for example, 1/100000 or more, preferably 1/1000 or more, and for example, 1/5 or less, preferably 1/8 or less. When the ratio of the thickness of the removal material layer 4 relative to the thickness of the transparent layer 3 is within the above-described range, in the daylighting film 41 to be described later, the air layers 6 (described later) can be disposed in spaced-apart relation suitably in the lamination direction, and efficient disposal of the air layers 6 (described later) can be ensured.

The removal material layer 4 can be disposed on the surface of the transparent layer 3 by, for example, separately preparing the transparent layer 3 and the removal material layer 4, and they are laminated, or the removal material layer 4 can be formed on the surface of the transparent layer 3, and preferably, the removal material layer 4 is formed on the surface of the transparent layer 3.

The removal material layer 4 can be formed on the surface of the transparent layer 3 by, for example, a known film-forming method such as the following: the removal material layer 4 is formed on the surface of the transparent layer 3, or the transparent layer 3 and the removal material layer 4 are simultaneously formed by co-extrusion.

The removal material layer 4 is formed on the surface of the transparent layer 3 by, preferably, a known film-forming method, and to be more specific, dry processing, and wet processing are used. Examples of dry processing include physical vapor deposition (e.g., vacuum deposition, sputtering, ion plating, etc.), chemical vapor deposition, and aerosol deposition; and examples of wet processing include known application methods (e.g., spin coating, doctor blade method, gravure method, comma method, die coating, etc.). Of these film-forming methods, preferably, wet processing is used.

In the unit film 2, as shown in the phantom line in FIG. 11, a removal material layer 4 can also be provided on the reverse side surface of the transparent layer 3 (the other side surface in the thickness direction) by the method as described above.

In FIG. 11, the unit film 2 is formed by the same method as described in the first embodiment to be circular when viewed in the lamination direction, but its shape and the size are not particularly limited, and can be rectangular when viewed in the lamination direction.

Then, as shown in FIG. 12, the plurality of unit films 2 are laminated in the lamination direction (thickness direction), thereby preparing a laminate 5 (lamination step).

To be more specific, the plurality of unit films 2 are laminated in the lamination direction so that the transparent layer 3 and the removal material layer 4 are next to each other in the lamination direction. In FIG. 12, the number of the plurality of unit films 2 is simplified for convenience, and the laminate 5 including six unit films 2 is shown. But actually, the laminate 5 is formed by laminating 300 to 60000, preferably 1000 to 10000 unit films 2.

In such a laminate 5, the above-described adhesive layer can be provided between unit films 2 that are next to each other in the lamination direction (between the transparent layer 3 and the removal material layer 4), or, without providing the adhesive layer, unit films 2 that are next to each other in the lamination direction, to be more specific, the transparent layer 3 of the unit film 2 disposed one side in the lamination direction can be in direct contact with the removal material layer 4 of the unit film 2 disposed the other side in the lamination direction.

The laminate 5 can be, as necessary, thermocompression bonded (heat pressed).

The conditions for the thermocompression bonding include, a temperature of, for example, 30°C or more, preferably 50°C or more, and for example, 180°C or less, preferably 150°C or less; a pressure of, for example, 0.1MPa or more, preferably 0.5MPa or more, and for example, 50MPa or less, preferably 5MPa or less; and a time of, for example, 5 minutes or more, preferably 30 minutes or more, and for example, 180 minutes or less, preferably 60 minutes or less.

In the above manner, a columnar (block) laminate 5 extending in the lamination direction is formed.

Then, as shown in FIG. 12, in the same manner as in the first embodiment, the above-described support 15 is bonded to the lateral face 27 (surface extending along the lamination direction) of the laminate 5 along the lamination direction (bonding step).

Then, the lateral face layer 28 of the laminate 5 to which the support 15 is bonded is cut so that the plurality of unit films 2 are continuous in the lamination direction of the laminate 5 (thickness direction of the unit film 2) (cutting step).

The lateral face layer 28 of the laminate 5 can be cut without particular limitation as long as the lateral face layer 28 supported by the support 15 can be cut out from the laminate 5, and for example, the cutting can be performed in the same manner as in the first embodiment.

In the above manner, the laminate film 7 as an example of the laminate film is cut out from the laminate 5.

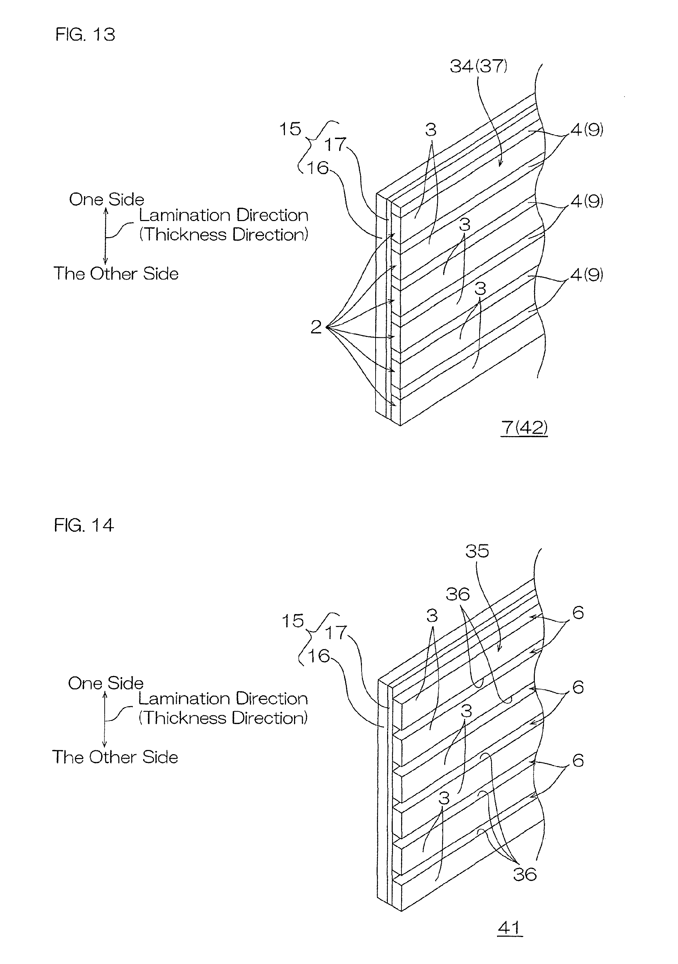

Such a laminate film 7 includes, as shown in FIG. 13, a laminate layer 34 and a support 15.

The laminate layer 34 is a lateral face layer 28 cut out from the support 15, and formed into a thin film. The laminate layer 34 includes a plurality of transparent layers 3 and a plurality of removal material layers 4 corresponding to the plurality of unit films 2, and in the lamination direction (surface direction perpendicular to the thickness direction in the laminate layer 34), the transparent layer 3 and the removal material layer 4 are disposed one by one repeatedly and continuously. The plurality of removal material layers 4 are disposed in line with an equal interval provided therebetween in the lamination direction (to the extent of the thickness of the transparent layer 3), and the removal material layers 4 are extending perpendicular to the lamination direction.

The thickness of the laminate layer 34 can be set suitably according to its purpose of use, and for example, 20 µm or more, preferably 50 µm or more, even more preferably 100 µm or more, and for example, 10 mm (10⁴ µm) or less, preferably 2 mm (2 × 10³ µm) or less, even more preferably 500 µm or less, particularly preferably 300 µm or less. The thickness of the laminate layer 34 can be adjusted suitably by the position and angle of the cutting blade 8 relative to the laminate 5 at the time of cutting the laminate 5.

In the second embodiment as well, when the laminate 5 is cylindrical (ref: FIG. 12), as shown in FIG. 8, the bonding step and the cutting step are performed preferably continuously by the cutting device 40 to prepare an elongated and flat belt laminate film 7.

Then, as shown in FIG. 14, the removal material layer 4 is removed from the laminate film 7 to replace the removal material layer 4 with the air layer 6 (replacement step).

The removal material layer 4 can be removed from the laminate film 7 without limitation, and for example, the removal material layer 4 can be physically removed (e.g., the removal material layer 4 can be cut with a cutter, etc.), or the removal material layer 4 can be removed chemically (e.g., the removal material layer 4 can be dissolved by a solvent, etc.). The removal material layer 4 is removed preferably chemically, and when the removal material layer 4 is formed from a soluble material, even more preferably, the removal material layer 4 is dissolved in a solvent.

The removal material layer 4 can be dissolved in a solvent and removed, by washing the laminate film 7 supported by a support 15 with a solvent that can dissolve the removal material layer 4.

To be more specific, when the removal material layer 4 is formed from a soluble (hydrophilic) material, the laminate film 7 supported by the support 15 is washed (sprayed or immersed) by, for example, water having a temperature of 20°C to 100°C. In this manner, the removal material layer 4 is dissolved in water, and the removal material layer 4 is removed from the laminate film 7.

In the above manner, the removal material layer 4 is replaced with the air layer 6, and the daylighting film 41 (an example of the optical film) is prepared.

Such a daylighting film 41 includes a film main body 35 composed of a plurality of transparent layers 3 and a plurality of air layers 6, and a support 15 that supports the film main body 35.

In the film main body 35, the transparent layer 3 and the air layer 6 are disposed one by one repeatedly and continuously in the lamination direction (surface direction perpendicular to the thickness direction in the daylighting film 41).

The plurality of transparent layers 3 are disposed in line with an equal space (air layer 6) provided therebetween in the lamination direction (surface direction of the daylighting film 41), and each of the plurality of air layers 6 is formed as a space between the transparent layers 3 that are next to each other in the lamination direction (surface direction of the daylighting film 41).

To be more specific, the air layer 6 is defined by the following: the other side surface (the other side surface in the lamination direction) of the transparent layer 3 on one side in the lamination direction (surface direction of the daylighting film 41) of the transparent layers 3 next to each other; one side surface (one side surface in the lamination direction) of the transparent layer 3 on the other side in the lamination direction (surface direction of the daylighting film 41) of the transparent layers 3 next to each other; and the pressure-sensitive adhesive layer 17 that corresponds to the portion between the transparent layers 3 next to each other.

The air layers 6 extend over the entire daylighting film 41 in a direction perpendicular to the lamination direction (surface direction of the daylighting film 41). That is, the border 36 of the transparent layer 3 and the air layer 6 cross at right angles with the lamination direction of the laminate 5 (surface direction of the daylighting film 41).

In such a second embodiment, as shown in FIGs. 13 and 14, a daylighting film 41 including a film main body 35 in which the transparent layer 3 and the air layer 6 are continuous in the lamination direction of the laminate 5 and a support 15 that supports the film main body 35 can be produced by forming a laminate film 7 including a laminate layer 34 (lateral face layer 28 of the laminate 5) in which the transparent layer 3 and the removal material layer 4 are continuous in the lamination direction and a support 15 that supports the laminate layer 34, and then removing the removal material layer 4 from the laminate film 7.

To attach the daylighting film 41 to the glass window 11, first, the daylighting film 41 is cut into a shape and size that are suitable for the portion to be attached, in the same manner as in the first embodiment (cutting step).

Then, the daylighting film 41 is bonded to, as shown in FIG. 15, for example, the inner side surface of the glass window 11.

The daylighting film 41 can be bonded to the inner side surface of the glass window 11 by, for example, in the same manner as in the first embodiment. Preferably, the daylighting film 41 is bonded to the inner side surface of the glass window 11 by applying or laminating an adhesive or pressure-sensitive adhesive to the surface of the film main body 29 on the side opposite to the side where the support 15 is provided or the inner side surface of the glass window 11.

By bonding the daylighting film 41 to the inner side surface of the glass window 11 in such a manner, the air layer 6 is covered from both sides in the thickness direction of the daylighting film 41 with the glass window 11 and the support 15 (pressure-sensitive adhesive layer 17), and therefore accumulation of a foreign substance such as dust in the air layer 6 can be suppressed.

When the daylighting film 41 is attached to the glass window 11, of light L (e.g., sunlight) entered from outside through the glass window 11, a portion of light L1 transmitted through the transparent layer 3 travels toward the floor 12 of the house 10, and another portion of light L2 is reflected at the border 36 of the transparent layers 3 and the air layer 6, and travels toward the ceiling 13 of the house 10.

Therefore, with the daylighting film 41, efficient daylighting can be achieved, and brightness of the entire house 10 can be improved.

With the second embodiment as well, the same operations and effects with the above-described first embodiment can be achieved.

### 3. Third Embodiment

Next, with reference to FIG. 11 to FIG. 14 and FIG. 16, a third embodiment of the method for producing an optical film of the present invention is described. In the third embodiment, those members that are the same as in the above-described first embodiment are designated with the same reference numerals, and their descriptions are omitted.

In the first embodiment, as shown in FIGs. 1 and 4, the unit film 2 is formed only from the transparent layer 3, but in the third embodiment, the unit film 2 includes, as shown in FIG. 11, a transparent layer 3, and a reflection layer 9.

Therefore, in the third embodiment, as shown in FIG. 11, first, a unit film 2 in which the transparent layer 3 and the reflection layer 9 are laminated is prepared in a plural number (preparation step).

The unit film 2 can be prepared by, for example, in the same manner as in the method for preparing a unit film 2 (unit film 2 including the transparent layer 3 and the removal material layer 4) according to a second embodiment. To be specific, as shown in FIGs. 6 and 7, a reflection layer 9 is disposed on the surface of the transparent layer 3 (one side surface in the thickness direction) to prepare a processing sheet 23, and then a unit film 2 having a predetermined shape can be cut out from the processing sheet 23; or a reflection layer 9 is disposed on the surface of a transparent layer 3 processed into a predetermined shape to prepare a unit film 2.

The unit film 2 in a plural number can be prepared by, for example, in the same manner as in the above-described first embodiment, and preferably, the unit film 2 in a plural number can be prepared by forming a processing sheet 23 into an elongated and flat belt form, and the unit film 2 can be cut out in a plural number from the processing sheet 23.

The reflection layer 9 is configured to reflect light, as shown in FIG. 11, and in view of improvement in reflectivity, preferably, formed into a thin film from a metal material.

Examples of metal materials that form the reflection layer 9 include metal elements (e.g., gold, silver, copper, iron, aluminum, chromium, nickel, etc.), and alloys composed of a plurality of metal elements, and preferably, silver and aluminum, and an alloy containing those elements, and even more preferably, aluminum is used. Such a metal material can be used as a single thin film, or two types or more of the thin film can be laminated.

The thickness of the reflection layer 9 is not particularly limited, as long as it can sufficiently reflect light, and for example, 20 nm or more, preferably 30 nm or more, and for example, 10 µm (10⁴ nm) or less, preferably 1 µm (10³ nm) or less, even more preferably 300 nm or less.

The ratio of the thickness of the reflection layer 9 relative to the thickness of the transparent layer 3 (thickness of the reflection layer 9/thickness of the transparent layer 3) is, for example, 1/100000 or more, preferably 1/2000 or more, and for example, 1/10 or less, preferably 1/100 or less. When the ratio of the thickness of the reflection layer 9 relative to the thickness of the transparent layer 3 is within the above-described range, in the daylighting film 42 to be described later, the reflection layers 9 can be disposed in the lamination direction suitably in spaced-apart relation, and efficient disposition of the reflection layers 9 can be ensured.

The reflectance of the reflection layer 9 for light (incident angle of 5°) is, for light having a wavelength of 440 to 600 nm, for example, 70% or more, preferably 80% or more, and for example, 98% or less, preferably 95% or less.

The reflection layer 9 can be disposed on the surface of the transparent layer 3 by, for example, the following methods: the transparent layer 3 and the reflection layer 9 are prepared separately, and they are laminated; or the reflection layer 9 is formed on the surface of the transparent layer 3. Preferably, the method in which the reflection layer 9 is formed on the surface of the transparent layer 3 is used.

The reflection layer 9 can be formed on the surface of the transparent layer 3 by, for example, a known film-forming method.

Examples of the known film-forming method include dry processing and wet processing. Examples of dry processing include physical vapor deposition (e.g., vacuum deposition, sputtering, ion plating, etc.), chemical vapor deposition, and aerosol deposition, and examples of wet processing include the above-described method in which a solution containing a metal material is applied on the surface of the transparent layer 3, and a plating method. Of these film-forming methods, preferably, dry processing, even more preferably, physical vapor deposition method, particularly preferably, vacuum deposition is used.

Furthermore, as shown by the phantom line in FIG. 11, the unit film 2 may also include a reflection layer 9 formed in the above-described manner on the reverse face (the other side face in the thickness direction) of the transparent layer 3.

In FIG. 11, the unit film 2 is formed in the same manner as in the first embodiment into a circular shape when viewed in the lamination direction, but the shape and the size is not particularly limited, an can be rectangular when viewed in the lamination direction.

Then, as shown in FIG. 12, the plurality of unit films 2 are laminated in the lamination direction (thickness direction) to prepare a laminate 5 (lamination step).

To be more specific, the plurality of unit films 2 are laminated in the lamination direction so that the transparent layer 3 and the reflection layer 9 are next to each other in the lamination direction. In FIG. 12, for convenience, the number of the plurality of unit films 2 are simplified, and the laminate 5 is shown as including six unit films 2. However, actually the laminate 5 is formed by laminating, for example, 500 to 50000, preferably 1000 to 10000 unit films 2.

In such a laminate 5, the above-described adhesive layer may be provided between the unit films 2 that are next to each other in the lamination direction (between the transparent layer 3 and the reflection layer 9). Alternatively, without providing the adhesive layer, the unit films 2 that are next to each other in the lamination direction, to be more specific, the transparent layer 3 of the unit film 2 disposed on one side in the lamination direction, and the reflection layer 9 of the unit film 2 disposed on the other side in the lamination direction may be directly brought into contact with each other.

Examples of the adhesive used for the adhesive layer include the above-described adhesives and pressure-sensitive adhesives, and preferably, acrylic pressure-sensitive adhesive is used. Such an adhesive can be used singly, or can be used in combination of two or more.

The adhesive layer has a thickness of, for example, 20 nm or more, preferably, 50 nm or more, and for example, 100 µm or less, preferably, 10 µm or less.

To provide the laminate 5 with the adhesive layer, before laminating the plurality of unit films 2, the above-described adhesive is applied on the surface of the reflection layer 9 (one side surface in the thickness direction) and/or the reverse face (the other side surface in the thickness direction) of the transparent layer 3 in each of the unit films 2, and then the unit films 2 to which the adhesive is applied are laminated.

The laminate 5 is thermocompression bonded (heat pressed) as necessary, under the above-described conditions.

In the above manner, a columnar (block) laminate 5 extending in the lamination direction is formed.

Then, as shown in FIG. 12, the above-described support 15 is bonded to the lateral face 27 of the laminate 5 (surface extending along the lamination direction) along the lamination direction (bonding step).

Then, the lateral face layer 28 of the laminate 5 to which the support 15 is bonded is cut so that the plurality of unit films 2 are continuous in the lamination direction of the laminate 5 (thickness direction of the unit film 2)(cutting step).

The lateral face layer 28 of the laminate 5 can be cut by any method without limitation as long as the lateral face layer 28 supported by the support 15 can be cut out from the laminate 5, and can be cut in the same manner as in first embodiment.

In the above manner, the lateral face layer 28 supported by the support 15, that is, a daylighting film 42 (en example of the optical film) is cut out from the laminate 5.

Such a daylighting film 42 include, as shown in FIG. 13, a film main body 37 and a support 15.

The film main body 37 is the lateral face layer 28 cut out from the support 15, and is formed into a thin film. The film main body 37 includes the plurality of transparent layers 3 and a plurality of reflection layers 9 corresponding to the plurality of unit films 2, and in the lamination direction (surface direction perpendicular to the thickness direction of the film main body 37), the transparent layer 3 and the reflection layer 9 are disposed one by one repeatedly and continuously therein. The plurality of reflection layers 9 are disposed in line in equally spaced apart relation in the lamination direction (to the extent of the thickness of the transparent layer 3), and the reflection layers 9 extend perpendicularly to the lamination direction.

The thickness of the film main body 37 can be set suitably based on purpose of use, and for example, 20 µm or more, preferably 50 µm or more, even more preferably 100 µm or more, and for example, 10 mm (10⁴ µm) or less, preferably 2 mm (2 × 10³ µm) or less, even more preferably 500 µm or less, particularly preferably 300 µm or less. The thickness of the film main body 37 can be suitably adjusted by the arrangement, and angles of the cutting blade 8 relative to the laminate 5 when the laminate 5 is cut.

In the third embodiment as well, when the laminate 5 is cylindrical (ref: FIG. 12), preferably, the bonding step and the cutting step are performed continuously with the cutting device 40 as shown in FIG. 8 to prepare an elongated and flat belt daylighting film 42.

With such a third embodiment, a daylighting film 42 including a film main body 37 (lateral face layer 28 of the laminate 5) in which the transparent layer 3 and the reflection layer 9 are continuous in the lamination direction, and a support 15 that supports the film main body 37 can be produced.

To attach the daylighting film 42 to a glass window 11, first, in the same manner as in the first embodiment, the daylighting film 42 is cut into a shape and size that are suitable for the portion to be attached (cutting step).

Then, as shown in FIG. 16, the daylighting film 42 is bonded to the inner side surface of the glass window 11.

The daylighting film 42 can be bonded to the inner side surface of the glass window 11, for example, in the same manner as in the first embodiment. FIG. 16 shows a method in which the carrier 16 of the support 15 is removed, and the exposed pressure-sensitive adhesive layer 17 is pressure bonded to the inner side surface of the glass window 11, thereby attaching the daylighting film 1 to the inner side surface of the glass window 11.

When the daylighting film 42 is attached to the glass window 11 in such a manner, of light L (e.g., sunlight) entered from outside through the glass window 11, a portion of light L1 transmitted through the transparent layer 3 travels toward the floor 12 of the house 10; and another portion of light L2 is reflected at the reflection layer 9 and travels toward the ceiling 13 of the house 10.

Therefore, with the daylighting film 42, efficient daylighting can be achieved, and brightness of the entire house 10 can be improved.

With the third embodiment as well, the same operations and effects with the above-described first embodiment can be achieved.

### 4. Fourth Embodiment

Next, with reference to FIG. 17 to FIG. 20, a fourth embodiment of the method for producing an optical film of the present invention is described. In the fourth embodiment, those members that are the same as in the above-described first embodiment to third embodiment are designated with the same reference numerals, and descriptions thereof are omitted.

In the first embodiment, as shown in FIGs. 6 and 7, each of the plurality of unit films 2 is cut out (prepared) individually from the processing sheet 21 in the preparation step, but in the fourth embodiment, as shown in FIGs. 17 and 18, the plurality of unit films 2 can be cut out (prepared) as a continuous film 45 in which the plurality of unit films 2 are next to each other continuously in the preparation step.

The continuous film 45 is formed, for example, integrally from the plurality of unit films 2 that are arranged side by side continuously in the elongated direction of the processing sheet 21.

In FIG. 17 and FIG. 18, the continuous film 45 is formed from three unit films 2 for convenience, but the continuous film 45 is not limited thereto, and the continuous film 45 is formed of, for example, 1000 to 60000, preferably 1000 to 10000 unit films 2.

In the case where the plurality of unit films 2 form the continuous film 45 as well, the shape and the size of the unit films 2 are not particularly limited, and in FIG. 17, each of the unit films 2 is formed rectangular (quadrangle) when viewed in the thickness direction, and in FIG. 18, the unit film 2 is formed circular when viewed in the thickness direction.

Then, in the unit films 2 that are next to each other in the longitudinal direction of the continuous film 45, their peripheral portions are in continuity, thereby forming a continuous portion 46.

To be more specific, the continuous portions 46 are formed, when the unit film 2 is a quadrangle, as shown in FIG. 17, from sides of the unit films 2 that are making contact with each other in the longitudinal direction.

The continuous portions 46 are formed, when the unit film 2 is circular, as shown in FIG. 18, from the tangent line portions that are in contact with each other of the unit films 2 in the longitudinal direction.

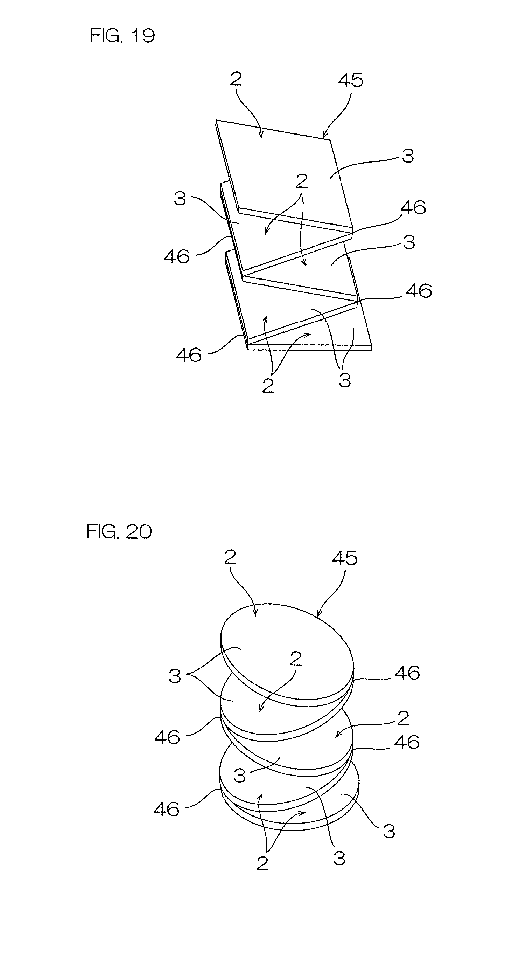

Then, in the lamination step, the continuous film 45 is folded in zigzag, as shown in FIGs. 19 and 20, with the continuous portions 46 as bending points.

In this manner, the plurality of unit films 2 are laminated one by one to overlap with each other in the thickness direction, as shown in FIGs. 2 and 5, to prepare a laminate 5.

That is, in the lamination step, the continuous film 45 is bent at the continuous portion 46 of the unit films 2 that are next to each other to laminate the plurality of unit films 2 to form a laminate 5.

Thus, when the plurality of unit films 2 are laminated, the plurality of unit films 2 are laminated smoothly.

The laminate 5 may be formed from a single continuous film 45, or may be formed from a plurality of continuous films 45. The continuous portion 46 may have slits (grooves) or perforation.

Furthermore, as shown in FIGs. 17 and 18, when the laminate 5 in which the transparent layer 3 and the removal material layer 4 are laminated is formed from the continuous film 45, after cutting out the continuous film 45 from the processing sheet 22, the continuous film 45 is folded in zigzag manner.

In this case, the processing sheet 22 preferably includes the removal material layer 4 on both sides in the thickness direction of the transparent layer 3. In this manner, in the laminate 5, the removal material layer 4 is disposed reliably between the transparent layers 3 next to each other in the lamination direction.

When the laminate 5 including the transparent layer 3 and the reflection layer 9 laminated therein is formed from continuous film 45, after cutting out the continuous film 45 from the processing sheet 23, the continuous film 45 is folded in zigzag manner.

In this case, the processing sheet 23 preferably includes the reflection layer 9 on both sides in the thickness direction of the transparent layer 3. In this manner, in the laminate 5, the reflection layer 9 is reliably disposed between the transparent layers 3 next to each other in the lamination direction.

### 5. Modification

In the first embodiment to fourth embodiment, the cutting device 40 includes a pair of holding members 31, but without limitation to such, the cutting device 40 may include a holding axis instead of the pair of holding members 31.

The holding axis is generally cylindrical, and is configured to be rotatable with its axis as the center.

In this case, the laminate 5 is formed with a through hole corresponding to the holding axis. The through hole penetrates generally the center portion along the axial direction when the laminate 5 is viewed in the axial direction (lamination direction).

The holding axis is inserted into the through hole of the laminate 5 so that their relative rotation is unable and so that the axis of the holding axis coincides with the axis of the laminate 5. In this manner, the holding axis holds the laminate 5.

In the above-described cutting step, the holding axis is driven and rotates counterclockwise when viewed from one side in the axial direction (frontward relative to the paper plane in FIG. 8) by the driving force from a driving source included in the cutting device 40.

In this manner, the laminate 5 held by the holding axis rotates with the axis as the center.

Therefore, in such a modification as well, an elongated and flat belt daylighting film 1 is prepared, and operations and effects that are the same as the above-described first embodiment to fourth embodiment can be achieved.

Each of the first embodiment to fourth embodiment and modification can be suitably combined.

### Examples

While in the following, the present invention is described in further detail with reference to Examples, the present invention is not limited to any of them by no means. The values such as the size in Examples can be replaced with the upper limit value or the lower limit value of corresponding parts described in the above-described embodiment.

### Example 1

A polyvinyl chloride film (processing sheet) having a thickness of 180 µm was punched into a circular shape having a diameter of 25 cm, thereby producing 600 circular transparent layers (unit film) (preparation step). The polyvinyl chloride film had an index of refraction relative to air of 1.54.

Then, the 600 circular transparent layers were laminated without using an adhesive between the transparent layers, and then a pressure (5MPa) was applied from both sides in the lamination direction to keep the cylindrical shape, thereby preparing a laminate (lamination step). The laminate had a diameter of 25 cm and a height of (length in the lamination direction) 108 mm (180 µm × 600).

Then, the laminate and support were set to the cutting device 40 shown in FIG. 8.

To be specific, the laminate was held by the pair of holding members 31 so as to sandwich the laminate from both sides in the lamination direction, and the support was wound around the rotational axis 32, thereby configuring a support roll.

At this time, the pair of holding members 31 sandwiched the laminate from both sides in the lamination direction with the above-described pressure (5MPa). The support had a polypropylene film (carrier) having a thickness of 40 µm and an acrylic pressure-sensitive adhesive layer (pressure-sensitive adhesive layer) having a thickness of 30 µm. The acrylic pressure-sensitive adhesive layer was formed on one side surface of the polypropylene film, and on the other side surface of the polypropylene film, a release-treatment layer was provided by a release-treatment agent.

When the laminate was held by the pair of holding members 31, the distal end of the cutting blade 8 was in contact with the lateral face of the laminate. The cutting blade 8 was disposed along the lamination direction of the laminate.

Then, the support drawn out from the support roll was pulled toward a tangential line direction of the laminate so that the pressure-sensitive adhesive layer was pressure bonded to the lateral face of the laminate, and bonded to the lateral face of the laminate within the range of the central angle of 240° in the laminate (bonding step).

Then, the pair of holding members 31 was driven and rotated counterclockwise when viewed from one side in the axial direction of the holding members 31 (frontward relative to the paper plane in FIG. 8) by the motor (not shown) of the cutting device 40.

Then, the laminate held by the pair of holding members 31 rotated with its axis as the center, and the support roll is driven with the axis of the rotational axis 32 as the center.

In this manner, the lateral face layer of the laminate to which the support is bonded was continuously cut out as in the Katsura-muki technique (cutting step).

As described above, a daylighting film including the film main body (lateral face layer of the laminate) and support, and having an elongated and flat belt form was prepared. In such a film main body, a plurality of transparent layers were disposed in the lamination direction continuously.

Then, the daylighting film was suitably cut in accordance with the size of the glass window 11 to which the film was to be bonded. In this manner, to be specific, a daylighting film of a rectangular shape when viewed from the top having a long side of 78 cm and a short side of 10.8 cm was produced. The film main body of the daylighting film had a thickness of 250 µm.

The daylighting film was bonded to the inner side surface of the glass window 11 as shown in FIG. 10 and used, and efficient daylighting was confirmed.

### Example 2

A film of PVA (removal material layer) having a thickness of 20 µm was formed on one side surface of a polyvinyl chloride film (transparent layer) having a thickness of 180 µm. A processing sheet was prepared in this manner. The index of refraction of the polyvinyl chloride film relative to air was 1.58.

Then, the processing sheet (polyvinyl chloride film on which film of PVA was formed) was cut, and 3000 circular unit films having a diameter of 20 cm were cut out from the processing sheet (preparation step).

Then, the plurality of unit films were laminated so that the polyvinyl chloride film and the PVA layer were next to each other in the thickness direction (lamination step).

Then, the laminated plurality of unit films were thermocompression bonded under the conditions of 50°C and 5MPa for 30 minutes, thereby preparing a cylindrical (block) laminate. The laminate had a diameter of 20 cm and a height (length in the lamination direction) of 60 cm.

Then, the laminate and the support were set to the cutting device 40 as shown in FIG. 8 in the same manner as in Example 1.

The support included a PET film having a thickness of 40 µm (carrier), and an acrylic pressure-sensitive adhesive layer having a thickness of 30 µm (pressure-sensitive adhesive layer). The acrylic pressure-sensitive adhesive layer was formed on one side surface of the PET film, and a release-treatment layer was provided on the other side surface of the PET film by a release-treatment agent.

In this manner, a laminate film including a laminate layer (lateral face layer of the laminate) and a support, and having an elongated flat belt form was prepared. In the prepared laminate layer, the transparent layer and the removal material layer were continuous in the lamination direction, and disposed one by one repeatedly. The laminate layer had a thickness of 200 µm.

Then, the laminate film was washed with water to dissolve and remove the removal material layer, thereby replacing the removal material layer with the air layer (replacement step).

A daylighting film 1 including the film main body and the support and having an elongated and flat belt form was prepared in the above manner. In the prepared film main body, the transparent layer and the air layer were continuous in the lamination direction, and were disposed one by one repeatedly.

Then, the elongated daylighting film was suitably cut in accordance with the size of the glass window 11 to which the film was to be bonded. To be specific, a daylighting film of a rectangular shape when viewed from the top having a long side of 78 cm and a short side of 60 cm was produced in this manner.

The daylighting film was bonded to the inner side surface of the glass window 11 as shown in FIG. 15 and used, and efficient daylighting was confirmed.

### Example 3

A metal reflection film (reflection layer) was formed by vacuum depositing aluminum on one side surface of a polyvinyl chloride film having a thickness of 180 µm (transparent layer). The metal reflection film had a thickness of 100 nm. A processing sheet was prepared in this manner.

Then, the processing sheet (polyvinyl chloride film on which the metal reflection film was formed) was cut, and 3000 circular unit films having a diameter of 50 cm were cut out from processing sheet.

Then, the plurality of unit films were laminated so that the polyvinyl chloride film and the metal reflection film were repeated one by one. At this time, adhesives (to be specific, acrylic pressure-sensitive adhesive) were inserted between the unit films, thereby forming an adhesive layer of 5 µm.

Then, the laminated plurality of unit films were thermocompression bonded under the conditions of 50°C and 5MPa for 30 minutes, thereby preparing a cylindrical (block) laminate. The laminate had a diameter of 50 cm and a height (length in the lamination direction) of 55.5 cm.

Then, the laminate and the support were set to the cutting device 40 as shown in FIG. 8 in the same manner as in Example 1.

The support included a PET film having a thickness of 40 µm (carrier) and an acrylic pressure-sensitive adhesive layer having a thickness of 30 µm (pressure-sensitive adhesive layer). The acrylic pressure-sensitive adhesive layer was formed on one side surface of the PET film, and a release-treatment layer was provided on the other side surface of the PET film by a release-treatment agent.

A daylighting film 1 including the film main body (lateral face layer of the laminate) and the support and having an elongated and flat belt form was prepared in the above-described manner. In the prepared film main body, the transparent layer and the reflection layer continuous in the lamination direction, and were disposed one by one repeatedly.

Then, the elongated and flat belt daylighting film was suitably cut in accordance with the size of the glass window 11 to which the film was to be bonded. To be specific, a daylighting film of a rectangular shape when viewed from the top having a long side of 78 cm and a short side of 55.5 cm was produced in this manner. The film main body of the daylighting film had a thickness of 200 µm.

The daylighting film was bonded to the inner side surface of the glass window 11 as shown in FIG. 16 and used, and efficient daylighting was confirmed.

### Example 4

A polyvinyl chloride film having a thickness of 180 µm (processing sheet) was formed into an elongated and flat belt form having a length of 150 m and a width of 30 cm. The index of refraction of the polyvinyl chloride film relative to air was 1.54.

Then, from the elongated and flat belt processing sheet, a continuous film in which 600 circular transparent layers (unit films) having a diameter of 25 cm are arranged side by side continuously in the elongated direction of the processing sheet was cut out by punching (preparation step).

In the transparent layers that are next to each other in the continuous film, continuous portions were formed by tangent line portions that are in contact with each other in the longitudinal direction of the continuous film.

Then, the continuous film was folded in zigzag with the continuous portions as bending portions, to laminate the plurality of transparent layers so that they are overlapped with each other one by one in the thickness direction, thereby preparing a laminate (lamination step). No adhesive was used between the transparent layers in this embodiment. The laminate had a diameter of 25 cm and a height (length in the lamination direction) of 108 mm (180 µm × 600).

Thereafter, a pressure (5MPa) was applied to the laminate from both sides of the lamination direction, thereby holding the laminate as a cylindrical shape.

Then, the laminate and the support were set to the cutting device 40 as shown in FIG. 8 in the same manner as in Example 1.

The support included a polypropylene film (carrier) having a thickness of 40 µm and an acrylic pressure-sensitive adhesive layer having a thickness of 30 µm (pressure-sensitive adhesive layer). The acrylic pressure-sensitive adhesive layer was formed on one side surface of the polypropylene film, and on the other side surface of the polypropylene film, a release-treatment layer was provided by a release-treatment agent.

Then, the lateral face layer of the laminate to which the support was bonded was continuously cut out with the cutting device 40 as in the Katsura-muki technique.

In this manner, a daylighting film including a film main body (lateral face layer of the laminate) and a support, and having an elongated and flat belt form was prepared. In the prepared film main body, the plurality of transparent layers were disposed continuous in the lamination direction.

Then, the daylighting film was cut suitably in the same manner as in Example 1, and bonded to the inner side surface of the glass window 11 as shown in FIG. 10 and used, and efficient daylighting was confirmed. The film main body of the daylighting film had a thickness of 250 µm.

### Example 5

A polyvinyl chloride film having a thickness of 180 µm (transparent layer) was formed into an elongated and flat belt form having a length of 600 m and a width of 25cm. Then, a film of PVA (removal material layer) having a thickness of 20 µm was formed on both sides of the polyvinyl chloride film. A processing sheet was prepared in this manner. The index of refraction of the polyvinyl chloride film relative to air was 1.54.

Then, from the elongated and flat belt processing sheet, a continuous film, in which 3000 circular unit films each having a diameter of 20 cm arranged side by side continuously in the elongated direction of the processing sheet, was cut out by punching (preparation step).

In the unit films that are next to each other in the continuous film, continuous portions were formed by tangent line portions that are in contact with each other in the longitudinal direction of the continuous film.

Then, the continuous film was folded in zigzag with the continuous portion as the bending portions, thereby laminating the plurality of unit films to be overlapped with each other one by one in the thickness direction. In this manner, the polyvinyl chloride film and the PVA layer were disposed next to each other and one by one repeatedly in the thickness direction.

Then, the laminated plurality of unit films were thermocompression bonded under the conditions of 50°C and 5MPa for 30 minutes, thereby preparing a cylindrical (block) laminate (lamination step). The laminate had a diameter of 20 cm and a height (length in the lamination direction) of 60 cm.

Then, the laminate and the support were set to the cutting device 40 as shown in FIG. 8 in the same manner as in Example 1.

The support included a PET film having a thickness of 40 µm (carrier) and an acrylic pressure-sensitive adhesive layer having a thickness of 30 µm (pressure-sensitive adhesive layer). The acrylic pressure-sensitive adhesive layer was formed on one side surface of the PET film, and a release-treatment layer was provided on the other side surface of the PET film by a release-treatment agent.

Then, the lateral face layer of the laminate to which the support was bonded was continuously cut out by the cutting device 40 as in the Katsura-muki technique.

In this manner, a laminate film including a laminate layer (lateral face layer of the laminate) and a support, and having an elongated flat belt form was prepared. In the prepared laminate layer, the transparent layer and the removal material layer were continuous in the lamination direction, and disposed one by one repeatedly. The laminate layer had a thickness of 200 µm.

Then, the laminate film was washed with water to dissolve and remove the removal material layer, thereby replacing the removal material layer with the air layer (replacement step).

A daylighting film 1 including the film main body and the support and having an elongated and flat belt form was prepared in the above manner. In the prepared film main body, the transparent layer and the air layer were continuous in the lamination direction, and were disposed one by one repeatedly.

Then, the daylighting film was suitably cut in the same manner as in Example 2, and bonded to the inner side surface of the glass window 11 as shown in FIG. 15 and used, and efficient daylighting was confirmed.

### Example 6

A polyvinyl chloride film having a thickness of 180 µm (transparent layer) was formed into an elongated and flat belt form having a length of 1500 m and a width of 55 cm. Then, aluminum was vacuum deposited on both sides of the polyvinyl chloride film, thereby forming a metal reflection film (reflection layer). The metal reflection film had a thickness of 100 nm. A processing sheet was prepared in this manner.

Then, from the elongated and flat belt processing sheet, a continuous film, in which 3000 circular unit films having a diameter of 50 cm were arranged side by side continuously in the elongated direction of the processing sheet, was cut out by punching (preparation step).

In the unit films that are next to each other in the continuous film, continuous portions were formed by tangent line portions that are in contact with each other in the longitudinal direction of the continuous film.

Then, the continuous film was folded in zigzag with the continuous portion as the bending portions, thereby laminating the plurality of unit films to be overlapped with each other one by one in the thickness direction. In this manner, the polyvinyl chloride film and the metal reflection film were disposed next to each other and one by one repeatedly in the thickness direction.

Adhesives (to be specific, acrylic pressure-sensitive adhesive) were inserted between the unit films, thereby forming an adhesive layer of 5 µm.

Then, the laminated plurality of unit films were thermocompression bonded under the conditions of 50°C and 5MPa for 30 minutes, thereby preparing a cylindrical (block) laminate (lamination step). The laminate had a diameter of 50 cm and a height (length in the lamination direction) of 55.5 cm.

Then, the laminate and the support were set to the cutting device 40 as shown in FIG. 8 in the same manner as in Example 1.

The support included a PET film having a thickness of 40 µm (carrier) and an acrylic pressure-sensitive adhesive layer having a thickness of 30 µm (pressure-sensitive adhesive layer). The acrylic pressure-sensitive adhesive layer was formed on one side surface of the PET film, and a release-treatment layer was provided on the other side surface of the PET film by a release-treatment agent.

In the above manner, a daylighting film 1 including a film main body (lateral face layer of the laminate) and a support, and having an elongated and flat belt form was prepared. In the prepared film main body, the transparent layer and the reflection layer continuous in the lamination direction, and were disposed one by one repeatedly.

Then, the daylighting film was suitably cut in the same manner as in Example 3, and bonded to the inner side surface of the glass window 11 as shown in FIG. 16 and used, and efficient daylighting was confirmed. The film main body of the daylighting film had a thickness of 200 µm.

## Claims

1. A method for producing an optical film, the method comprising the steps of:
preparing a plurality of unit films each including a transparent layer configured to transmit light,
laminating the plurality of unit films in the thickness direction of the unit film to form a laminate,
bonding a support on the lateral face of the laminate along the lamination direction of the plurality of the unit films, and
cutting a lateral face layer of the laminate to which the support is bonded so that the plurality of unit films are continuous in the lamination direction.

2. The method for producing an optical film according to Claim 1, wherein in the laminate, the unit films that are next to each other in the lamination direction are in direct contact with each other.

3. The method for producing an optical film according to Claim 1, wherein the unit film is composed only of the transparent layer.

4. The method for producing an optical film according to Claim 1, wherein the unit film further include a removal material layer,
in the lamination step, the plurality of unit films are laminated so that the transparent layer and the removal material layer are next to each other in the lamination direction,
in the cutting step, the lateral face layer of the laminate to which the support is bonded is cut to form a laminate film including a laminate layer in which the transparent layer and the removal material layer are continuous in the lamination direction and the support that supports the laminate layer, and
the method further comprises a replacement step in which the removal material layer is removed from the laminate layer and the removal material layer is replaced with an air layer.

5. The method for producing an optical film according to Claim 1, wherein the unit film further includes a reflection layer configured to reflect light, and
in the lamination step, the plurality of unit films are laminated so that the transparent layer and the reflection layer are next to each other in the lamination direction.

6. The method for producing an optical film according to Claim 1, wherein the laminate is generally cylindrical extending in the lamination direction,
the support is a sheet, and is rolled to configure a support roll,
in the bonding step,
the support drawn out from the support roll is bonded to the lateral face of the laminate, and
in the cutting step,
a lateral face layer of the laminate to which the support is bonded is continuously cut by rotating the support roll with its axis as the center and rotating the laminate with its axis as the center.

7. The method for producing an optical film according to Claim 1, wherein in the preparation step, the plurality of unit films are prepared as a continuous film in which the plurality of unit films are next to each other continuously, and
in the lamination step, the continuous film is bent at a continuous portion of the unit films that are next to each other to laminate the plurality of unit films to form the laminate.

8. A daylighting film produced by a method for producing an optical film, the method comprising the steps of:
preparing a plurality of unit films each including a transparent layer configured to transmit light,
laminating the plurality of unit films in the thickness direction of the unit film to form a laminate,
bonding a support on the lateral face of the laminate along the lamination direction of the plurality of the unit films, and
cutting a lateral face layer of the laminate to which the support is bonded so that the plurality of unit films are continuous in the lamination direction.
